# EUROPÄISCHE PATENTSCHRIFT

(11) **EP 3 289 524 B1**
(45) Veröffentlichungstag und Bekanntmachung des Hinweises auf die Patenterteilung: **04.08.2021**
(21) Anmeldenummer: 16721080.6
(22) Anmeldetag: 29.04.2016
(51) Int. Cl.: G06K 19/077, G09F 3/03

(54) **SIEGEL UND VERFAHREN ZUM PRÜFEN EINES GUTS AUF MANIPULATION**
SEAL AND METHOD FOR TESTING A PRODUCT FOR MANIPULATION
SCEAU ET PROCÉDÉ POUR CONTRÔLER SI UNE MARCHANDISE A FAIT L'OBJET D'UNE MANIPULATION

(30) Priorität: 29.04.2015 DE 102015005556
(43) Veröffentlichungstag der Anmeldung: 07.03.2018
(73) Patentinhaber: Giesecke+Devrient Currency Technology GmbH, 81677 München (DE)
(72) Erfinder: FINKENZELLER, Klaus, 85774 Unterföhring (DE); STÖHR, Volker, 81827 München (DE); BURIANEK, Ferdiand, 80686 München (DE); RILL, Wilfried, 86456 Gablingen (DE); BOHN, Carsten, 81667 München (DE)
(86) Internationale Anmeldenummer: PCT/EP2016/000700
(87) Internationale Veröffentlichungsnummer: WO 2016/173718

(56) Entgegenhaltungen:
- EP-A1- 2 833 342
- US-A1- 2005 231 365

## Beschreibung

Die Erfindung betrifft ein Verfahren zum Prüfen eines Guts auf Manipulation. Die Erfindung betrifft weiterhin ein Siegel und ein System zum versiegelten Transport von Wertgegenständen.

Um die Echtheit und Unversehrtheit eines Guts sicherzustellen, wird in der Regel das Gut mit einem Siegel versehen. Anhand des Siegels, oftmals auch Plombe genannt, kann festgestellt werden, ob eine Manipulation am Gut vorgenommen wurde. Die Unversehrtheit des Guts zeigt gleichzeitig die dessen Unversehrtheit und gilt oftmals als Beweis für dessen Echtheit. Das Gut kann ein Behältnis sein, in dem ein zu sichernder Gegenstand angeordnet ist.

Das Siegel verhindert in der Regel nicht eine Manipulation des Guts und/ oder des Gegenstands in dem Gut; es dient in der Regel lediglich als Manipulationsnachweis. Z.B. wird durch das Siegel nachgewiesen, dass ein Behälter für sensible Inhalte, bspw. eine Transportbox für Wertgegenstände, ein Briefumschlag oder ein Gehäuse eines geeichten Instruments, z.B. Zähler, nicht (unberechtigt) geöffnet wurde. Ist das Siegel nicht zerstört (gebrochen, angegriffen), kann davon ausgegangen werden, dass der sensible Inhalt nicht manipuliert wurde. Nur berechtigte Personen dürfen üblicherweise Siegel anbringen und entfernen.

Siegel werden in unterschiedlicher Ausgestaltung eingesetzt. Es gibt Siegel, die in flüssigem Aggregatszustand an das zu versiegelnde Gut, bspw. Briefumschlag, angebracht werden (Wachssiegel). Weiterhin können Siegel durch mechanisches Verrasten an das Gut angeordnet werden. Siegel können ähnlich zu einem Kabelbinder ausgebildet sein und an das zu versiegelnde Gut, vorzugsweise ein Behälter, angeordnet werden. Über das Siegel kann ein Zugriff auf Inhalte in dem Gut nachzuweisen. Derartige mechanische Siegel können zur Versiegelung von Container für Geldscheine (Cash-Box) oder von Container für sterile medizinische Instrumente verwendet werden. Weiterhin sind flächige Klebesiegel bekannt. Die Klebesiegel sind als Klebestreifen ausgebildet und werden bspw. in einem Öffnungsbereich eines Transportbehälters aufgeklebt. Zum Öffnen des Transportbehälters muss das Siegel aufgetrennt werden. Das Siegel kann optisch durch das menschliche Auge geprüft werden.

Siegel können mit einer aufgedruckten Information versehen sein. Die Information kann beispielsweise in Textform oder Codiert, bspw. als 2D-Code, z.B. Barcode oder QR-Code, aufgebracht sein.

Am Beispiel eines Geldkreislaufs werden Geldscheine gebündelt in einer Cash-Box angeordnet. Die Cash-Box wird mechanisch mithilfe eines mechanischen Siegels versiegelt. Auf dem Siegel ist ein Barcode aufgedruckt, der die den Wert des Inhalts der Cash-Box wiedergibt. Zum Öffnen der Cash-Box muss das Siegel zerstört werden. Bei der Abgabe der Cash-Box an einem Zielort wird optisch und manuell das Siegel auf Beschädigungen geprüft. Liegt keine Beschädigung vor, gilt das Siegel als nicht aufgebrochen und es liegt kein unberechtigter Zugriff auf die Cash-Box bzw. deren Inhalte vor.

Mit Lösungen des Standes der Technik kann die Unversehrtheit eines Guts nachgeprüft werden. Nichterlaubte bzw. unberechtigte Manipulationen auf Wertgegenstände und sensible Gegenstände können nachgewiesen werden. Manipulierte Gegenstände bzw. Gegenstände, die potentiell unberechtigt manipuliert wurden, können optisch erkannt werden.

Die Dokumente EP 2 833 342 A1 und US 2005/0231365 A1 offenbaren eine Siegelvorrichtung mit einem Befestigungselement und einem Transponder. In dem Befestigungselement ist wenigstens ein Leiter angeordnet. Anhand einer Widerstandsbestimmung des Leiters wird die Unversehrtheit des Befestigungselements und somit des Siegels bestimmt.

Die bisher bekannten Möglichkeiten benötigen einen hohen Personalaufwand. Der Automatisierungsgrad ist gering. Darüber hinaus könnte ein Angreifer ein aufgebrochenes Siegel reparieren oder ersetzen, so dass eine optische Erkennung einer unberechtigten Manipulation durch einen Mitarbeiter nicht oder kaum möglich ist.

Die Aufgabe der Erfindung ist, ein Siegel, ein Verfahren und ein System aufzuzeigen, womit der Automatisierungsgrad erhöht wird. Weiterhin soll ein sichererer Nachweis einer Manipulation des Siegels möglich sein.

Diese Aufgabe wird durch die in den unabhängigen Ansprüchen definierten Merkmalskombinationen gelöst. Bevorzugte Ausführungsformen sind Gegenstand der Unteransprüche.

Ein erfindungsgemäßes Verfahren zum Versiegeln und Prüfen eines Guts auf potentielle Manipulation sieht vor, dass ein Siegel bereitgestellt wird. Das Siegel weist eine Antenne, einen Chip, ein Messelement und eine Messeinrichtung auf. Das Messelement ist angepasst und ausgebildet, bei einer Manipulation des Siegels und/oder Guts eine bestimmte physikalische Eigenschaft zu ändern. Die Messeinrichtung ist geeignet und ausgebildet, die physikalische Eigenschaft des Messelements zu bestimmen. In einem Schritt wird das Siegel an das zu versiegelnde Gut angeordnet. Das zu versiegelnde Gut gilt als versiegelt. Das Siegel empfängt eine Prüfabfrage von einem Schreib-Lesegerät vorzugsweise über eine drahtlose Kommunikationsschnittstelle. In einem Detektionsschritt wird die physikalische Eigenschaft des Messelements als erster Messwert bestimmt. Der Chip erstellt eine Antwort betreffend den ersten Messwert und sendet die Antwort über die drahtlose Kommunikationsschnittstelle an das Schreib-Lesegerät. Ein Vergleich des ersten Messwerts mit einem Referenzwert ergibt, ob das Siegel bzw. das Gut manipuliert wurde.

Das erfindungsgemäße Verfahren schafft die Möglichkeit, selbst bei repariertem Siegel nach einer Manipulation (Angriff), den Angriff festzustellen. Eine Manipulation des Siegels bewirkt eine Vielzahl an Änderungen physikalischer Eigenschaften des Siegels. Erfindungsgemäß ist vorgesehen, dass das Messelement hinsichtlich einer Manipulation exponiert am Siegel ausgebildet ist und eine Manipulation des Siegels eine Manipulation des Messelements bedingt.

Für die Prüfung des Messelements können unterschiedliche physikalische Eigenschaften in Betracht gezogen werden. Zum einen können elektrische Eigenschaften, wie z. B. elektrischer Leitwert, Kapazität oder Impedanz, zum anderen optische Eigenschaften, wie z. B. ein Lichtbrechungsindex, oder akustische Eigenschaften bestimmt werden. Darüber hinaus können auch Längeneigenschaften durch optische Laufzeitmessung, Phasenverschiebung der Lichtfrequenz oder Reflexionsmessung bestimmt werden. Auch wären hier Reflexionseigenschaften denkbar. Weiterhin kann die physikalische Eigenschaft lediglich binär geprüft werden, z. B. indem geprüft wird, ob eine Licht-, Schall- und/ oder elektrische Leitung stattfindet.

Der Referenzwert zu den Messwerten kann während der Herstellung des Siegels, vorzugsweise im Herstellwerk, bestimmt werden. Der Referenzwert und/ oder erste Messwert wird vorzugsweise mit einer eindeutigen Identifikation des Chips und/ oder des Siegels im Chip, in einem Benutzergerät und/oder in einem Hintergrundsystem zu einer eindeutigen Identifikation des Chips und/ oder des Siegels hinterlegt. Das Benutzergerät kann beispielsweise ein tragbarer Computer, ein mobiles Kommunikationsgerät, z. B. Smartphone oder Tablet, und/ oder ein speziell zum Versiegeln vorgesehenes, insbesondere mobiles, Endgerät sein.

In einer Ausführungsform kann der Referenzwert durch den ersten Messwert ersetzt werden. Besonders bei mehrmaliger Verwendung des erfindungsgemäßen Siegels ist eine Abweichung denkbar. Der Referenzwert kann während der Herstellung des Siegels und/ oder während des Versiegelns ermittelt bzw. festgelegt werden. Insbesondere, wenn der Referenzwert während des Versiegelns bestimmt wurde, kann der Referenzwert von einem bisher festgelegten Referenzwert abweichen.

Nach dem bisher beschriebenen Ablauf kann eine weitere Abfrage von einem Schreib-Lesegerät zur Prüfung des Siegels gesendet werden. Das Siegel bestimmt die physikalische Eigenschaft des Messelements als weiteren Messwert. Ein Vergleich des weiteren Messwerts mit dem Referenzwert ergibt, ob das Siegel manipuliert wurde. Ergibt der Vergleich, dass keine Manipulation stattfand, wird vorzugsweise der weitere Messwert als Referenzwert gespeichert. Hier handelt es sich um einen iterativen Prozess. Auf eine weitere Abfrage wird erneut ein weiterer Messwert bestimmt.

In einer Ausführungsform kann der Referenzwert und/ oder erste Messwert während des Versiegeln des Guts und/ oder während des Anbringens des Siegels an das Gut bestimmt werden. Die Messeinrichtung, vorzugsweise Teil des Chips, bestimmt den Referenzwert und/ oder ersten Messwert. Bevorzugt interpretiert die Messeinrichtung den Referenzwert und/ oder ersten Messwert auf eine Manipulation des Siegels.

Die Kommunikation zwischen Chip bzw. Siegel und dem Schreib-Lesegerät erfolgt vorzugsweise über drahtloser Übertragung. Vorzugsweise werden Informationen mittels RFID- (Radio Frequency Identification) Technik übertragen. Besonders bevorzugt wird zur Kommunikation das Prinzip der modulierten Rückstreuung (oftmals auch UHF-Backscatter genannt) genutzt. In einer bevorzugten Ausgestaltung wird das Siegel batterielos betrieben. Die Antenne generiert aus dem elektromagnetischen Feld des Schreib-Lesegeräts (Leserfeld) eine elektrische Energie zum Betrieb des Chips.

In einer bevorzugten Ausführungsform kann das Schreib-Lesegerät den Vergleich des Referenzwerts mit dem ersten bzw. weiteren Messwert durchführen. Das Schreib-Lesegerät kann den Referenzwert aus dem Speicher des Chips auslesen und/ oder durch eine Kommunikationsschnittstelle von einem Hintergrundsystem erhalten.

Weiterhin kann der Chip den Referenzwert mit dem zweiten Messwert vergleichen. Falls eine Differenz festgestellt wird, bewertet vorzugsweise der Chip die Differenz und erstellt entsprechend eine Aussage, ob eine Manipulation des Siegels vorliegt bzw. vorliegen könnte aus. Diese Aussage kann in der Antwort an das Schreib-Lesegerät formuliert sein. Die Aussage kann zusätzlich den Referenzwert, ersten und/ oder weiteren Messwert umfassen.

Das Hintergrundsystem kann ein Rechner, insbesondere ein Server, sein. Der Rechner kann mit dem Schreib-Lesegerät bspw. über ein Netzwerk verbunden sein. Das Schreib-Lesegerät kann Teil des Hintergrundsystems sein, wobei das Hintergrundsystem lediglich das Schreib-Lesegerät zur Kommunikation mit dem Siegel verwendet. Bspw. handelt es sich bei dem Hintergrundsystem um einen mobilen Rechner, in dem das Schreib-Lesegerät bspw. als NFC-Schnittstelle implementiert ist. Weiterhin kann das Hintergrundsystem auf eine Datenbank zugreifen, in welcher bspw. eine Identifikation des Siegels, insbesondere des Chips in Verbindung mit dem ersten Messwert und/ oder zweiten Messwert gespeichert ist.

Es ist nicht notwendig, gleiche Schreib-Lesegeräte und Hintergrundsysteme zu verwenden. Vielmehr können unterschiedliche Geräte, bspw. mobile Endgeräte wie Smartphones, Tabletts oder Notebooks verwendet werden.

Gemäß der Erfindung kann vorgesehen sein, dass das Siegel eine Schnittstelleneinrichtung umfasst. Über die Schnittstelleneinrichtung wird der Chip bzw. die Messeinrichtung mit dem Messelement verbunden. Die Schnittstelleneinrichtung kann konfigurierbar ausgebildet sein. D.h., die Verbindung zwischen dem Chip bzw. der Messeinrichtung mit dem Messelement wird erst durch nach dem Konfigurieren hergestellt.

Vorzugsweise umfasst das Siegel ein weiteres, wenigstens ein zweites, Messelement. Das weitere Messelement ist ebenfalls mit der Schnittstelleneinrichtung verbunden. Diese kann so konfiguriert werden, dass der Chip bzw. die Messeinrichtung selektiv auf wenigstens eines der Messelemente zugreifen kann. Die Konfiguration im Chip und/ oder im Hintergrundsystem abgelegt werden. Anschlüsse von Messelementen müssen nicht bereits während der Herstellung des Siegels oder während des Versiegelns mit Anschlüssen der Schnittstelleneinrichtung gezielt verbunden werden. Vielmehr können die jeweiligen Anschlüsse zufällig zugeordnet werden. Die Zuordnung wird erfindungsgemäß durch eine Konfigurationsmatrix in der Schnittstelleneinrichtung vorgenommen, indem Anschlüsse der Schnittstelleneinrichtung Anschlüsse des Chips bzw. der Messeinrichtung zugeordnet werden. Bspw. bei einem

Angriff auf das Siegel durch Auftrennen, das gleichzeitig zu einem Auftrennen und einer Beschädigung der Messelemente führt, kann das Schnittbild nicht mehr zu einer Zuordnung zwischen Messelement und Schnittstelle bzw. Messeinrichtung führen. Der Angreifer könnte das Siegel optisch reparieren, eine funktionale Reparatur ist nicht möglich. In einer vorteilhaften Ausführungsform handelt es sich bei der Schnittstelle um eine selbstlernende Schnittstellenmatrix, welche bspw. durch Selbstprüfung die Konfigurationsmatrix erstellt. Bspw. während des Versiegelns prüft die Konfigurationsmatrix bzw. deren Steuerung die Anschlüsse der Schnittstelleneinrichtung zu den Messelementen, bspw. mittels Durchgangsprüfung, und erstellt entsprechend eine Konfiguration.

Vorzugsweise ist die Zuordnung der Anschlüsse der Schnittstelleneinrichtung zu Anschlüssen des Chips bzw. der Messeinrichtung nicht permanent. Bevorzugt wird die Zuordnung erst dann aktiviert, wenn der erste und/oder zweite Messwert bestimmt werden soll. In anderen Worten erfolgt die physikalische Zuordnung erst während des Betriebes des Chips. Dies kann bspw. durch das Schreib-Lesegerät ausgelöst werden. Ein Angreifer kann eine Manipulation des Siegels nicht reparieren bzw. verschleiern, da dem Angreifer nach Manipulation des Siegels eine Zuordnung der Anschlüsse insbesondere bei Verwendung einer Vielzahl von Messelementen nicht möglich ist. Darüber hinaus ist bei der Fertigung des Siegels die Verbindung zwischen Schnittstelleneinrichtung und Messelement frei wählbar, so dass die Herstellung nicht exakt verlaufen muss. Die Herstellung ist einfacher und schneller. Darüber hinaus wird gewährleistet, dass nicht jedes Siegel dem Siegel gleichen Typs entspricht. Um das Siegel zu manipulieren, ohne dass ein Nachweis möglich wäre, müsste ein Angreifer jedes Siegel separat analysieren. Eine Übertragung von Siegel zu Siegel ist nicht möglich.

Zur Zuordnung der Anschlüsse der Schnittstelleneinrichtung zu Anschlüssen des Chips bzw. der Messeinrichtung kann eine Zuordnungstabelle im Chip und/ oder im Hintergrundsystem gespeichert sein.

Die Schnittstellenmatrix kann als hartverdrahtete Matrix ausgebildet sein. Insbesondere wäre bei der Verwendung von mehreren Messelementen möglich, diese zusammen im Wesentlichen verdrillt und/ oder verwoben zu führen, beispielsweise in und/ oder an einem Befestigungselement. Vorzugsweise sind die Messelemente optisch für das menschliche Auge nicht voneinander zu unterscheiden. Die Schnittstellenmatrix kann wenigstens eine Kontaktierung umfassen, wodurch wenigstens eines der mehreren Messelementen kontaktiert wird. Nach einer Manipulation ändern sich wenigstens die physikalische Eigenschaft und/oder die Zuordnung der Schnittstelle zu dem kontaktierten Messelement, so dass die Manipulation sicher erkannt wird.

Vorzugsweise die Mehrzahl an Messelemente kann gemäß einer Ausgestaltung verdrillt im Befestigungselement angeordnet sein. Insbesondere können die Messelemente vorgespannt, beispielsweise über die Schnittstelle und/ oder durch das Befestigungselement, beispielsweise durch Umspritzen, vorgespannt vorliegen. Alternativ kann die Umhüllung des Befestigungselements die Messelemente als Hülse umgeben, ohne diese formschlüssig zu umgeben. Liegen die Messelemente vorgespannt vor und sind diese aus einem Federmaterial ausgebildet, so werden sich die Messelemente bei einer Manipulation des Siegels, insbesondere bei einem Auftrennen wenigstens von zwei Messelementen annähernd zufällig orientieren. Je mehr Messelemente aufgetrennt werden, umso unmöglicher wird ein Zusammenfügen der getrennten Messelemente.

Vorzugsweise findet die Kommunikation zwischen Siegel und Schreib-Lesegerät sowie gegebenenfalls mit dem Hintergrundsystem verschlüsselt statt. Inhalte zum ersten und/ oder zweiten Messwert sowie zur qualitativen Aussage zur Manipulation des Siegels und/ oder zur gegebenenfalls Konfiguration des Siegels sind für einen Angreifer durch Abhören der Kommunikation nicht erkennbar.

In einer vorteilhaften Ausgestaltung ist das Siegel als Durchziehplombe ausgebildet. Das Gut ist vorzugsweise ein Behältnis, ausgebildet zur Aufnahme eines Wertelements, bspw. Banknoten. Das Siegel wird vorzugsweise am Behältnis angeordnet und dadurch versiegelt. Bspw. wird das Siegel an einer Lasche des Behältnisses über eine Öffnung angeordnet. Ein unmittelbarer Zugriff auf das Wertelement ist nur möglich, indem das Siegel, insbesondere das Messelement, manipuliert, vorzugsweise zerstört, wird. Anschließend kann das Behältnis geöffnet werden.

Ein erfindungsgemäßes Siegel umfasst ein Befestigungselement, einen Chip, eine Antenne und ein Verbindungselement. Das Befestigungselement ist flexibel, langgestreckt streifenförmig ausgebildet und weist ein erstes und zweites Ende auf. Das Befestigungselement umfasst ein Messelement. Das Befestigungselement weist einen ersten und einen zweiten Befestigungselementkontaktabschnitt auf. Das Verbindungselement ist ausgebildet und geeignet, den ersten und den zweiten Befestigungselementkontaktabschnitt des Befestigungselements zu kontaktieren. Eine Messeinrichtung des Siegels ist mit dem Messelement verbunden. Die Messeinrichtung ist über eine Schnittstelleneinrichtung mit dem Messelement verbunden. Die Messeinrichtung ist geeignet, eine bestimmte physikalische Eigenschaft des Messelements zu bestimmen.

Der Chip des Siegels kann über die Antenne des Siegels drahtlos mit einem Lese-Schreibgerät kommunizieren und Informationen austauschen. Der Chip weist einen Prozessor und vorzugsweise einen Speicher auf. Die Messvorrichtung kann in dem Chip angeordnet, d.h. Teil des Prozessors, sein.

Das Verbindungselement kontaktiert vorzugsweise mechanisch unlösbar den ersten und/ oder zweiten Befestigungselementkontaktabschnitt. Nach Herstellen des Kontakts zwischen dem Verbindungselement und dem Befestigungselement können die Kontaktstellen nur vorzugsweise mittels Zerstörung des ersten bzw. zweiten Befestigungselementkontaktabschnitts getrennt werden. Bspw. kann der Kontakt durch Verrasten, Aufschmelzen und/ oder Umspritzen hergestellt werden.

In einer Ausführungsform ist der zweite Befestigungselementkontaktabschnitt zur zerstörungsfreien unlösbaren Anordnung am zu versiegelnden Gut ausgebildet, wobei bei einer Manipulation des Siegels, insbesondere bei einem Zugriff auf das Gut, das Befestigungselement zumindest beschädigt wird.

In einer Ausführungsform ist das Messelement zur Übertragung von elektrischen Signalen geeignet und entsprechend als elektrischer Leiter ausgebildet. Vorzugsweise ist der elektrische Leiter flexibel ausgebildet. Der elektrische Leiter ist hinsichtlich Material und Querschnitt dimensioniert, damit dieser bei einem Angriff auf das Befestigungselement und somit auf den elektrischen Leiter beschädigt, insbesondere zerstört wird. Bspw. ist der elektrische Leiter ein Draht mit einem Durchmesser von maximal 0,1 mm. Grundsätzlich kann das Befestigungselement bzw. das Messelement durchtrennbar sein, bspw. mit einem Messer oder einer Schere. Der Leiter ist vorzugsweise als Lackdraht ausgeführt. D.h., der Leiter weist einen Kern aus einem leitfähigen Material, vorzugsweise Kupfer, auf, wobei der Kern mit einem Lack zur elektrischen Isolation und zum Schutz des leitfähigen Materials versehen ist. Der leitfähige Kern kann als massiver oder mehrdrähtiger, insbesondere fein- oder feinstdrähtiger, Leiter oder als Geflecht ausgebildet sein.

Grundsätzlich kann das Befestigungselement bzw. Messelement ausgelegt sein, dass es bei definierter Zugbeanspruchung, z. B. menschliche Normkraft, durchtrennt wird. Weiterhin kann das Befestigungselement bzw. Messelement Sollbruchstellen aufweisen.

In einer Ausführungsform kann das Messelement zur Übertragung von optischen Signalen ausgebildet sein. Das Messelement kann ein optischer Leiter sein, z.B. Glasfaser, PMMA (Polymethylmethacrylat). In einer Ausgestaltung kann am Ende des Messelements eine Reflexionseinheit ausgebildet sein, so dass der optische Leiter durch Reflexion geprüft werden kann. Entsprechend wäre der optische Leiter lediglich als Hinleiter vorzusehen, wodurch eine Rückleitung durch den optischen Leiter selbst stattfindet. Auch ein Auskoppeln bzw. Ankoppeln ist nicht notwendig. Weiterhin kann das Messelement als akustischer Leiter ausgebildet sein. Bspw. kann der akustische Leiter als Hohlleiter ausgeführt sein. Die Messeinrichtung kann als Messgröße eine Frequenzlage, Phasenverschiebung, eine Resonanzfrequenz und/ oder einen Impulsabstand bestimmen. Mit akustischer Messung kann eine Manipulation des Siegels, insbesondere des Befestigungselements, sicher festgestellt werden, da jegliche Veränderung des Befestigungselements eine Änderung der akustischen Eigenschaften bedingt. Als akustischer Leiter können verschiedene Materialien, bspw. Metalle oder Gase, verwendet werden. In einer Ausführungsform ist das Messelement als zumindest partieller Hohlkörper ausgebildet. Der Hohlkörper kann an seiner Innenwand mit einer Beschichtung, bspw. elektrisch und/ oder optisch leitfähigen Beschichtung versehen sein. Weiterhin könnte die Beschichtung bestimmte optisch und/ oder akustische Reflexionseigenschaften bzw. Absorptionseigenschaften aufweisen.

Das Messelement im Befestigungselement kann als Einzelleiter ausgebildet sein, der sich vom Verbindungselement weg und im kontaktierten Zustand, d.h. das Verbindungselement kontaktiert den ersten und zweiten Befestigungselementkontaktabschnitt, wieder zurück erstreckt. Vorzugsweise belegt das Messelement eine einzelne Bahn in Längsrichtung des Befestigungselements. Eine Schnittfläche senkrecht zur Längserstreckung des Befestigungselements würde die Querschnittsfläche des Messelements zeigen. Das Verbindungselement kontaktiert das Messelement über den ersten bzw. zweiten Befestigungselementkontaktabschnitt des Befestigungselements. Ein Signal von der Messeinrichtung kann über das Verbindungselement, den ersten Befestigungselementkontaktabschnitt des Befestigungselements, das Messelement, den zweiten Befestigungselementkontaktabschnitt des Befestigungselements und das Verbindungselement wieder an die Messeinrichtung geleitet werden. Eine Prüfung des Messelements insbesondere zwischen dem ersten und zweiten Befestigungselementkontaktabschnitt und somit eine Prüfung auf Unversehrtheit des Befestigungselements ist möglich. Selbstverständlich kann eine Vielzahl an derartigen Messelementen im Befestigungselement angeordnet sein.

Alternativ kann das Messelement als Leiterschleife ausgebildet sein. D.h, das Messelement ist abschnittsweise als Doppelleiter im Befestigungselement ausgebildet und belegt somit wenigstens zwei Bahnen. Eine Schnittfläche senkrecht zur Längserstreckung des Befestigungselements würde wenigstens zweimal die Querschnittsfläche des Messelements zeigen. Vorzugsweise liegen der erste und zweite Befestigungselementkontaktabschnitt benachbart zueinander, vorzugsweise an gleicher lokaler Position, in Längserstreckung des Befestigungselements. Eine Signaleinkopplung und eine Signalauskopplung finden an wenigstens annähernd gleicher Stelle statt. Vorzugsweise befindet sich der Umkehrpunkt vor dem Ende des Befestigungselements, so dass der Umkehrpunkt von dem Befestigungselement abgedeckt wird.

Bei einer bevorzugten Ausgestaltung ist bei einem Messelement als lediglich Hinleiter, die maximale Entfernung eines Endes des Messelements, das bei nicht aktiviertem Siegel mit der Schnittstelle verbunden ist, geringer als die Entfernung zum zweiten Befestigungselementkontaktabschnitt. Analoges gilt für den Umkehrpunkt bei einem Messelement als Hin- und Rückleiter. Sowohl bei der Ausgestaltung als Hin- und Rückleiter als auch bei der Ausgestaltung als Hinleiter ist bevorzugt eine mechanische Befestigung des zweiten Befestigungselementkontaktabschnitt des Befestigungselements, beispielsweise durch eine Klemmverbindung und/ oder Rastverbindung vor der maximalen Entfernung des Messelements. Ein Aufbrechen bzw. eine Manipulation des Siegels betrifft eine Manipulation des Messelements.

In einer bevorzugen Ausführungsform weist das Befestigungselement eine Umhüllung auf. Vorzugsweise ist die Umhüllung aus elektrisch, akustisch und/oder optisch nichtleitendem Kunststoff und flexibel ausgebildet. Die Umhüllung kann das Messelement partiell umgeben. Alternativ kann das Befestigungselement an der Umhüllung einen Freibereich mit Zugriff auf das Messelement umfassen. Die Umhüllung ist ausgebildet, am ersten und/ zweiten Befestigungselementkontaktabschnitt ein Kontaktieren des Verbindungselements auf das Messelement zu ermöglichen.

In einer Ausgestaltung ist die Umhüllung anliegend und unmittelbar benachbart zum Messelement angeordnet. Alternativ kann die Umhüllung als Rohr ausgebildet sein, in dem sich das Messelement erstreckt. D.h., das Messelement ist zu einem bestimmten Grad innerhalb der Umhüllung beweglich. Die Umhüllung umgibt das Messelement nicht formschlüssig.

In einer vorteilhaften Ausgestaltung umfasst das Siegel zu dem Messelement ein weiteres Messelement (Messelemente). Das weitere Messelement kann ähnlich dem ersten Messelement ausgeführt sein. Die Messelemente können miteinander verschalten bzw. gekoppelt sein. Weiterhin kann die Messeinheit zu jedem der Messelemente eine physikalische Eigenschaft bestimmen. Die physikalische Eigenschaft kann sich zwischen den Messelementen unterscheiden, bspw. elektrischer Leitwert und optischer Durchgang.

In einer Ausführungsform umfasst die Schnittstelleneinrichtung eine Schnittstelle. Über die Schnittstelle kann die Messeinrichtung über den ersten und/ oder Befestigungselementkontaktabschnitt mit dem Messelement verbunden werden. Die Schnittstelle kann eine Klemmvorrichtung aufweisen. Die Klemmvorrichtung kann als Schneidklemmvorrichtung und/ oder Lamellenkontakt ausgebildet sein. Die Schnittstelle durchdring die Umhüllung (falls vorhanden) und kontaktiert das Messelement.

In einer Ausführungsform ist der von der Schnittstelle kontaktierte Bereich des Messelements mit der Schnittstelleneinrichtung fest, insbesondere kraft- und/ oder stoffschlüssig, bspw. mittels Crimpen, Löten und/ oder Schweißen, verbunden. Weiterhin kann wenigstens ein von der Schnittstelle kontaktierter Bereich des Messelements lösbar, bspw. durch Klemmen, mit der Schnittstelleneinrichtung verbunden werden.

Nach initialem Ermitteln der physikalischen Eigenschaft des Messelements kann jede Manipulation des Messelements durch Änderung dessen physikalischer Eigenschaft ermittelt werden. Eine bereits von der Messeinrichtung ermittelte Eigenschaft (Referenzwert) kann vorzugsweise nur von einem berechtigten Benutzer zurückgesetzt werden. Dieser Referenzwert ist als maßgeblicher Wert abgelegt und bildet eine Grundlage zur Bewertung auf Manipulation des Siegels. Bspw. ein Lösen und erneutes Anordnen des Befestigungselements von dem Verbindungselement könnte eine Änderung des elektrischen Leitwerts zwischen der Schnittstelleneinheit, ersten Befestigungselementkontaktabschnitt, Messelement, zweiten Befestigungselementkontaktabschnitt und Schnittstelleneinheit ändern. Diese Änderung kann als unberechtigtes Lösen des Befestigungselements interpretiert werden.

Eine lösbare Verbindung des wenigstens eines Befestigungselementkontaktabschnitts mit dem Verbindungselement weist den Vorteil auf, dass das Siegel mehrmals an verschiedene zu versiegelnde Güter verwendet werden kann, ohne das Siegel für weitere Benutzung zu beschädigen. Zudem ist eine Auswertung auf eine unerwünschte Manipulation des Siegels möglich.

Vorzugsweise wird die initial ermittelte physikalische Eigenschaft im Speicher des Chips abgelegt.

In einer Ausführungsform kann die Schnittstelleneinrichtung wenigstens vier Schnittstellen umfassen, wobei zwei Schnittstellen das Messelement im Bereich des ersten und zweiten Befestigungselementkontaktabschnitts kontaktieren. Die zwei weiteren Schnittstellen sind mit der Messeinrichtung verbunden. Die der Messeinrichtung zugeordneten Schnittstellen können mit den dem Messelement zugeordneten Schnittstellen, bspw. mittels Drahtbrücke, d.h. fest verbunden sein.

Anstatt einer festen Verbindung kann eine Schnittstellenmatrix vorgesehen sein, mittels derer die Verbindung zwischen den der Messeinrichtung zugeordneten Schnittstellen und den dem Messelement zugeordneten Schnittstellen verbunden werden können. Die Zuordnung der Schnittstellen (auch Anschlüsse der Schnittstelleneinrichtung) zueinander bzw. die Schnittstellenmatrix kann durch eine Konfigurationsmatrix dargestellt werden. Insbesondere bei Verwendung mehrerer Messelemente können Schnittstellen der Schnittstelleneinheit einfach und schnell mit der Messeinrichtung verbunden werden. Die Messelemente bzw. deren Anschlüsse müssen bei der Herstellung und/ oder beim Versiegeln, d.h. zum Anordnen des Siegels an einem zu versiegelnden Gut, nicht sortiert und an der dem Messelement zugeordneten Schnittstelle angeordnet werden. Die Zuordnung kann bspw. softwaregesteuert automatisch Zuordnung erfolgen, bspw. durch den Chip und/ oder der Messeinrichtung. Weiterhin kann eine Zuordnung über ein mit dem Siegel kommunizierendes Schreib-Lesegerät an der Schnittstellenmatrix eingestellt werden. Insbesondere kann die Schnittstelleneinrichtung, die Messeinrichtung und/ oder der Chip einen Lernvorgang zum Herstellen der Verbindungen und der Zuordnung der Schnittstellen bzw. zum Konfigurieren der Schnittstellenmatrix starten. Die Konfiguration (Konfigurationsmatrix) kann im Chip oder einem Hintergrundsystem abgespeichert werden. Die Schnittstellenmatrix ist demnach ausgebildet das Messelement mit der Messeinrichtung zu verbinden.

Insbesondere bei Verwendung von mehreren Messelementen in dem Befestigungselement, kann die Schnittstelleneinrichtung zur Kontaktierung der Messelemente mit einer Profilierung versehen sein. Die Schnittstelleneinrichtung weist dabei vorzugsweise Schneidkontakte auf. In einer Ausgestaltung sind die Schneidkontakte entsprechend der Profilierung angeordnet und/oder ausgerichtet, d.h. es werden entsprechend der Lage der Schneidkontakte ein oder mehrere Messelemente des Befestigungselements, vorzugsweise elektrisch, kontaktiert. Über eine Zuordnung von Schneidkontakt zu kontaktiertem Messelement kann beispielsweise durch einfache Durchgangsprüfung das Befestigungselement auf Manipulation geprüft werden. Das Befestigungselement kann komplementär zur Schnittstelleneinrichtung eine Profilierung aufweisen. Dadurch kann sichergestellt werden, dass zur Profillage ein Messelement von einem Schneidkontakt kontaktiert wird, wobei gleichzeitig eine Manipulation durch beispielsweise lösen und anschließendes erneutes Kontaktieren vorzugweise durch weglassen eines Verdrehschutzes sicher erkannt wird. Weiterhin kann jeglicher Anschluss des Befestigungselements und/oder des Verbindungselements, beispielsweise Anschlussöffnung, analog mit einer Profilierung, vorzugsweise umlaufend, ausgebildet sein.

Die Antenne ist zur Übertragung von Informationen ausgelegt. Insbesondere handelt es sich um eine Antenne zum Empfang von RFID-Signalen. Vorzugsweise verfügt der Chip bzw. das Siegel über keine eigene Energieversorgung. Zur Übertragung über größere Reichweiten ist insbesondere UHF-RFID vorgesehen. Ein Informationsaustausch zwischen einem Lesegerät und dem Siegel findet vorzugsweise mittels modulierter Rückstreuung (RADAR-Backscatter) statt. Entsprechend der Übertragungsweise von Informationen kann die Antenne in ihrer Struktur ausgebildet sein.

Entsprechend dem Messelement kann die Messeinrichtung zum Ermitteln einer elektrischen, zeitlichen, akustischen oder kapazitiven Eigenschaft ausgebildet sein. die Messeinrichtung und/ oder der Chip können aus der Eigenschaft des Messelements bspw. eine Längenbestimmung des Messelements bspw. zwischen den entsprechenden Schnittstellen ableiten.

In einer bevorzugten Ausführungsform ist das Befestigungselement strangförmig ausgebildet. Das Befestigungselement kann bspw. in einer Öffnung eines Behälters angeordnet werden, sodass durch Öffnen des Behälters das strangförmige Befestigungselement manipuliert wird. Weiterhin kann das Befestigungselement als Lasche ausgebildet sein. Das Befestigungselement kann bspw. an einer Durchgangsöffnung oder an einem Flansch angeordnet werden, so dass der bspw. Behälter nur durch Manipulation, insbesondere Zerstörung, des Befestigungselements geöffnet wird. Weiterhin kann das Befestigungselement flächig ausgebildet sein. Sollten im Befestigungselement mehrere Messelemente angeordnet sein und/ oder ein Messelement als Hin- und Rückleiter ausgeführt sein, sind jeder Leiter in einer gemeinsamen Ebene angeordnet. Dies ermöglicht eine platzsparende und gleichzeitig flächige und eng umschlossene Auflage an einem zu versiegelnden Gut.

In einer bevorzugten Ausgestaltung ist das Siegel zur Verwendung in Kombination mit einem der vorgenannten Verfahrensschritten und/ oder zur Anwendung als Siegel in einem der vorgenannten Verfahrensschritten geeignet.

Damit eine Manipulation sicher nachweisbar ist, ist das Befestigungselement vorzugsweise zerstörungsfrei unlösbar mit der Schnittstelleneinheit und/ oder mit dem Verbindungselement verbunden.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1a: eine schematische Darstellung einer bevorzugten Ausführungs-form eines Siegels gemäß der Erfindung,
- Fig.1b: eine weitere Darstellung einer Ausführungsform eines erfindungsgemäßen Siegels,
- Fig. 1c: eine weitere Darstellung einer Ausführungsform eines erfindungsgemäßen Siegels,
- Fig. 2a-b: eine weitere schematische Darstellung einer Ausführungsform gemäß der Erfindung,
- Fig. 3: eine schematische Darstellung zur Konfiguration von Schnittstellen in einer Ausführungsform gemäß der Erfindung,
- Fig. 4a-d: eine schematische Darstellung eines Verfahrens zum Anbringen eines erfindungsgemäßen Siegels und Prüfen der Unversehrtheit eines Guts gemäß der Erfindung,
- Fig. 5: eine weitere Darstellung zum Anbringen eines erfindungsgemäßen Siegels an einem Gut,
- Fig. 6a-c: Ausführungsformen zum Anbringen eines erfindungsgemäßen Siegels an einem Behältnis,
- Fig. 7: eine Ausführungsform zum Anbringen eines erfindungsgemäßen Siegels an einem Behältnis;
- Fig. 8: Ablaufschema eines erfindungsgemäßen Verfahrens zum Prüfen eines Guts auf Manipulation mit einem erfindungsgemäßen Siegel; und
- Fig. 9: Eine schematische Darstellung einer Profilierung eines Befestigungselements.

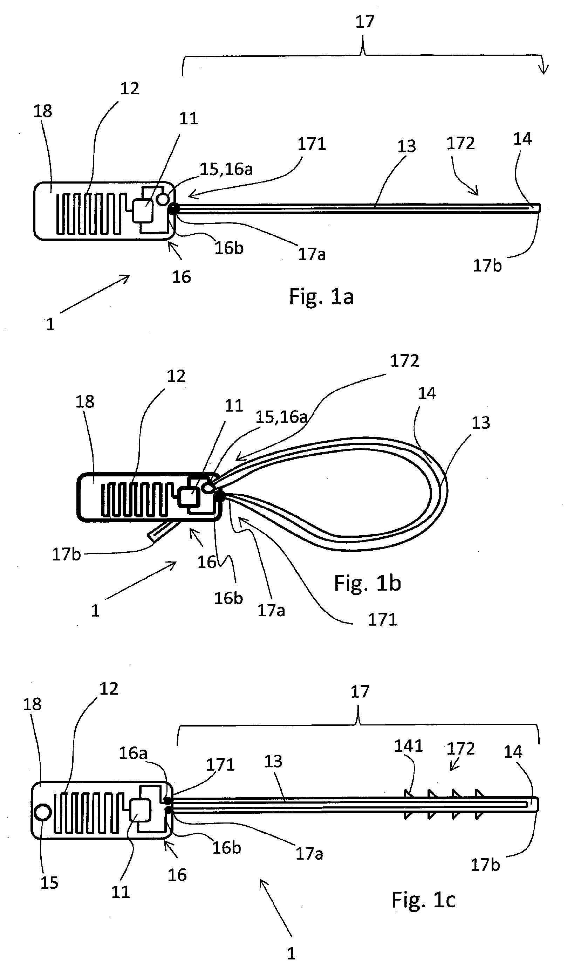

Fig. 1a zeigt eine erste bevorzugte Ausführungsform der Erfindung da. Ein Siegel 1 umfasst ein Verbindungselement 18 und ein Messelement 13. Das Verbindungselement 18 ist als plättchenförmig ausgebildet und weist im Verhältnis zu einer Länge und Breite eine geringe Dicke auf. Das Verbindungselement 18 umfasst einen Chip 11 und eine Antenne 12.

Der Chip 11 und die Antenne 12 sind vorliegend innerhalb des Verbindungselements 18 angeordnet und vom Material des Verbindungselements umgeben. In einer anderen Ausführungsform können der Chip 11 und/ oder die Antenne 12 bspw. im Befestigungselement angeordnet sein. Die Antenne 12 generiert aus einem elektromagnetischen Feld eine elektrische Energie und stellt sie dem Chip 11 zu dessen Energieversorgung bereit. Das Verbindungselement 18 weist eine Anschlussöffnung 15 auf, die sich durch die Dicke des Verbindungselements 18 erstreckt.

Von einer Seitenkante des Verbindungselements 18 ragt das Befestigungselement 17 ab. Das Befestigungselement 17 ist langgestreckt und streifenförmig ausgebildet. Zudem ist das Befestigungselement 17 flexibel ausgebildet. Das Befestigungselement 17 weist ein mit dem Verbindungselement 18 verbundenes erstes Ende 17a auf. Im Bereich der Verbindung zwischen dem ersten Ende 17a und dem Verbindungselement 18 ist am Befestigungselement 17 ein erster Befestigungselementkontaktabschnitt 171 definiert. Das Befestigungselement 17 weist ein zweites Ende 17b auf, das in Längserstreckung dem ersten Ende 17a gegenüberliegt. In Längserstreckung des Befestigungselements 17 ist am Befestigungselement 17 ein zweiter Befestigungselementkontaktabschnitt 172 festgelegt, der vom ersten Befestigungselementkontaktabschnitt 171 beabstandet ist. Das Befestigungselement 17 umfasst ein Messelement 13, das von einer Umhüllung 14 umgeben ist. Das Messelement 13 erstreckt sich im Wesentlichen in Längserstreckung des Befestigungselements 17 annähernd über dessen Länge. Der zweite Befestigungselementkontaktabschnitt 172 ist auf die Erstreckung des Messelements 13 beschränkt. Vorzugsweise, wie in Figur 1a dargestellt, erstreckt sich das Messelement 13 nicht bis zum zweiten Ende 17b. Vielmehr ist zwischen der maximalen Erstreckung vom ersten Befestigungselementkontaktabschnitt 171 bis zum zweiten Ende 17b ein messelementfreier Raum im Befestigungselement 17.

Das Messelement 13 ist über eine Schnittstelleneinrichtung 16 des Verbindungselements 18 mit dem Chip 11 verbunden. Die Schnittstelleneinrichtung 16 umfasst eine erste Schnittstelle 16a und eine zweite Schnittstelle 16b. Die zweite Schnittstelle 16b ist als integrierter Anschluss ausgebildet. Die zweite Schnittstelle 16b ist am ersten Ende 17a des Befestigungselements 17 angeordnet und ist am ersten Befestigungselementkontaktabschnitts 171 mit einem ersten Abschnitt des Messelements 13 verbunden.

Die erste Schnittstelle 16a ist in Kombination mit der Anschlussöffnung 15 ausgebildet. Die erste Schnittstelle 16a weist eine Schneid-/ Klemmkontakteinheit (nicht dargestellt) auf. Die Schneid-/ Klemmkontakteinheit der ersten Schnittstelle 16a ist mit dem Chip 11 verbunden.

Das Siegel 1 kann zum Versiegeln eines Guts an diesem angeordnet werden. Die Figur 1b zeigt b eispielhaft das Siegel 1 aus Figur 1a nach dem Anordnen an dem Gut. Das zweite Ende 17b wird von der Anschlussöffnung 15 aufgenommen und durch diese durchgeführt. Die Schneid-/Klemmkontakteinheit ist ausgebildet, die Umhüllung 14 zu durchtrennen und kontaktiert das Messelement 13. Der Bereich, an dem das Befestigungselement 17 am Verbindungselement 18, d.h an der ersten Schnittstelle 16a, mechanisch befestigt ist, legt den zweiten Befestigungselementkontaktabschnitt 172 exakt fest.

Zwischen der ersten Schnittstelle und der zweiten Schnittstelle 16b bildet das Messelement 13 eine Messstrecke. Der Chip 11 kann bspw. elektrische Eigenschaften des Messelements 13 bestimmen. Das Befestigungselement 17 ist über den zweiten Befestigungselementkontaktabschnitt 172 und der ersten Schnittstelle 16a mechanisch mit dem Verbindungselement 18 verbunden und verklemmt. Das Befestigungselement 17 bildet eine Lasche.

Nachdem das Befestigungselement 17 an der ersten Schnittstelle 16a angeordnet ist, kann eine Messeinrichtung des Chips 11 initial die elektrische Eigenschaft der Messstrecke bestimmen. Ein kontaktloses Lesegerät kann dem Chip 11 einen entsprechenden Befehl senden.

Wird der zweite Befestigungselementkontaktabschnitt 172 von der ersten Schnittstelle 16a durch einen Angreifer gelöst und wieder angeordnet (manipuliert), ist es dem Angreifer nahezu unmöglich, das zweite Ende 17b exakt an der gleichen Stelle wie bei der vorangegangene, ersten Befestigung an der ersten Schnittstelleneinheit 16a anzubringen. Mit Hilfe der Messeinrichtung kann vorzugsweise der Chip 11 den initial (erstes bzw. vorangegangenes Messen) bestimmten Wert zur physikalischen Eigenschaft und der nun vorliegenden elektrischen Eigenschaften (zweites Messen) vergleichen.

Erkennt der Chip 11 bspw. eine Änderung des elektrischen Leitwertes der Messtrecke, ist eine Manipulation des Siegels 1 anzunehmen. Ermittelt der Chip 11 keine oder nur eine sehr geringe Änderung, bspw. in einem Toleranzbereich, so ist von keiner Manipulation auszugehen. Anstelle der elektrischen Eigenschaft der Messstrecke kann die Messeinrichtung eine optische oder akustische Prüfung durchführen. Der Chip 11 kann einen Speicher zum Speichern von Messwerten umfassen. Der Chip 11 kann beim erstmaligen Anbringen einen Initialmesswert zur Messstrecke speichern. Jede erneute Inbetriebnahme des Chips 11 könnte ein erneutes Prüfen der Messstrecke veranlassen. Der Chip 11 detektiert, ob eine Manipulation des Siegels 1 vorliegt.

Anstelle der initialen Ermittlung der physikalischen Eigenschaft der Messstrecke kann diese Eigenschaft bereits während der Herstellung hinterlegt sein und ggf. im Chip oder in einem Hintergrundsystem gespeichert vorliegen. Bei der ermittelten physikalischen Eigenschaft kann es sich um einen analogen Wert oder einen binären Wert handeln, bspw. ob elektrischer Durchgang der Messstrecke vorliegt. Bei jeder Inbetriebnahme des Chips 11 kann initial und/ oder post-initial (nach der ersten Prüfung) in die Messstrecke, vorzugsweise die zweite Schnittstelle 16b, ein Prüfsignal eingespeist werden und am Ausgang der Messstrecke, vorzugsweise die erste Schnittstelle 16a, auf das Signal geprüft werden.

Insbesondere ist aus Fig. 1b ersichtlich, dass sich das Messelement 13 in Längserstreckung über den zweiten Befestigungselementkontaktabschnitt 172 erstreckt. Insbesondere ist dann sichergestellt, dass ich das Messelement 13 nach Anordnen des Siegels 1 am zu versiegelnden Gut durch die Anschlussöffnung 15 erstreckt, so dass das Messelement 13 über seine gesamten Länge bzw. Längserstreckung vom Verbindungselement 18 weg und wieder zum Verbindungselement 18 zurück erstreckt. Eine Manipulation des Befestigungselements 17 würde somit zwangsweise eine Manipulation des Messelements 13 bewirken. Durch Prüfen des Messelements 13 ist die Manipulation

In der Fig. 1c ist eine weitere Ausführungsform eines erfindungsgemäßen Siegels 1 zur Figur 1a dargestellt. Das Siegel 1 ist ähnlich dem Siegel 1 der Fig. 1a ausgebildet, und weist entsprechend ein Verbindungselement 18 auf, das kartenförmig (plättchenförmig) ausgebildet ist. Von dem kartenförmigen, flächigen Verbindungselement 18 ragt ein flexibles, langgestrecktes streifenförmiges Befestigungselement 17 ab. Im Verbindungselement 18 sind eine Antenne 12 sowie ein Chip 11 angeordnet. Die Antenne 12 dient der Energieversorgung des Chips 11 und dessen Kommunikation bspw. mit einem Lesegerät und/oder Hintergrundsystem.

Im Gegensatz zur Figur 1b weist das Befestigungselement 17 ein Messelement 13 auf, das in dem Befestigungselement 17 als Leiterschleife ausgebildet ist. Das Messelement 13 ist von einer Umhüllung 14 umgeben. Ein erstes Ende 17a des Befestigungselements 17 ist fest mit dem Verbindungselement 18 verbunden und legt den ersten Befestigungselementkontaktabschnitt 171 fest. Das Messelement 13 erstreckt vom ersten Ende 17a sich in Längsrichtung des Befestigungselements 17 im Wesentlichen über die gesamte Länge des Befestigungselements 17, wobei sich das Messelement 13 von seinem ersten Ende innerhalb des Befestigungselements 17 von diesem ersten Ende weg erstreckt und wieder in Richtung des ersten Endes zurückgeführt wird, so dass ein zweites Ende des Messelements 13 am ersten Befestigungselementkontaktabschnitts 171 angeordnet ist.

Ein zweites Ende 17b des Befestigungselements 17 ist in Längserstreckung des Befestigungselements 17 dem ersten Ende 17a gegenüberliegend. Im Bereich des zweiten Endes 17b sind an der Umhüllung 14 mehrere Rastnasen 141 ausgebildet und legen im nicht-versiegelten-Zustand des Siegels 1 den zweiten Befestigungselementkontaktabschnitt 172 fest. Die Rastnasen 141 sind widerhakenförmig an der Umhüllung 14 ausgebildet und vom zweiten Ende 17b schräg weggerichtet. Die Position des Befestigungselementkontaktabschnitts 172 ist durch die maximale Entfernung des Messelements 13 vom ersten Befestigungselementkontaktabschnitt 171 festgelegt. Vorzugsweise befinden sich die Rastnasen 141 und somit der zweite Befestigungselementkontaktabschnitt 171 zwischen dieser maximalen Entfernung/Erstreckung des Messelements 13 und dem ersten Befestigungselementkontaktabschnitt 171. Somit ist sichergestellt, dass bei einer Manipulation des Siegels 1 und somit einer Manipulation des Befestigungselements 17 das Messelement 13 beschädigt wird, wobei die Beschädigung sicher detektiert wird. Selbst, wie in dieser Figur dargestellt, das Messelement 13 als Leiterschleife und somit als Hin- und Rückleiter ausgebildet ist, stellt der Wendepunkt des Messelements 13 die maximale Entfernung dar. Bei einem Messelement 13 als einfacher Leiter (lediglich Hinleiter) wäre die maximale Entfernung durch das der Schnittstelle 16 gegenüberliegende Ende des Messelements 13 festgelegt.

Das Verbindungselement 18 weist am ersten Befestigungselementkontaktabschnitt 171 eine Schnittstelleneinrichtung 16 auf. Über die Schnittstelleneinrichtung 16 ist der Chip 11 mit der Leiterschleife des Messelements 13 verbunden. Das erste Ende des Messelements 13 ist mit einer ersten Schnittstelle 16a der Schnittstelleneinrichtung 16 und zweite Ende des Messelements 13 ist mit einer zweiten Schnittstelle 16b der Schnittstelleneinrichtung 16 verbunden. Die Leiterschleife bildet eine Messstrecke zur Bestimmung von elektrischen Eigenschaften des Messelements 13 durch eine Messeinrichtung im Chip 11.

Das Verbindungselement 18 weist eine Anschlussöffnung 15 auf. Die Anschlussöffnung ist zur Aufnahme und zum Durchführen des zweiten Endes 17b des Befestigungselements 17 ausgebildet. Zum Versiegeln eines Guts wird das zweite Ende 17b durch die Anschlussöffnung 15 durchgeführt. Wenigstens eine Rastnase 141 des Befestigungselements 17 hintergreift das Verbindungselement 18 in der Anschlussöffnung 15. Aufgrund der widerhakenförmigen Ausgestaltung der Rastnase 141 kann das das zweite Ende 17b nicht aus bzw. von der Anschlussöffnung 15 gelöst werden. Die Rastnase 141 hält das zweite Ende 17b an der Anschlussöffnung 15, so dass bei einem Öffnungsversuch das Befestigungselement 17 in seiner Längserstreckung zerstört wird, z. B. aufreißt. Dies hat eine Zerstörung des leiterschleifenförmigen Messelements 13 zur Folge. Die Messeinrichtung im Chip 11 kann bspw. durch Durchgangsprüfung zu dem Messelement 13 deren Zerstörung detektieren. Der Bereich, an dem die Rastnase 141 das Verbindungselement 18 hintergreift bildet exakt den zweiten Befestigungselementkontaktabschnitt 172 im versiegelten Zustand.

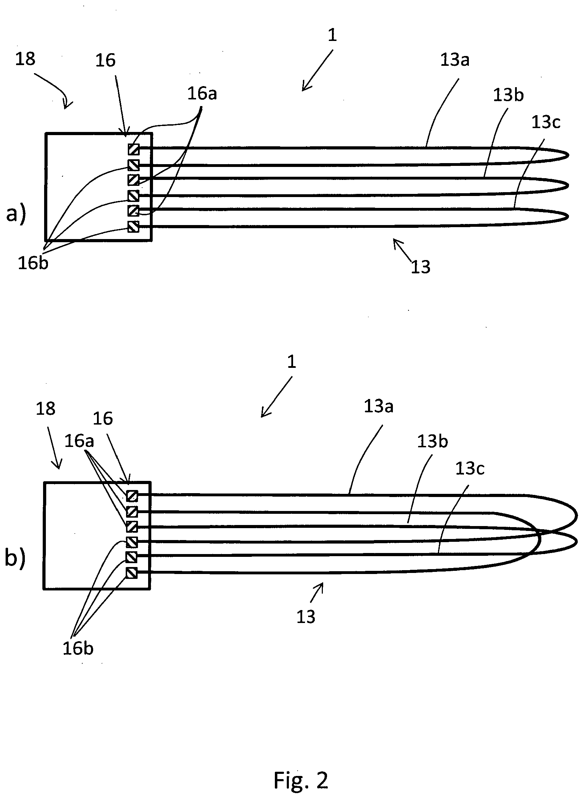

In der Fig. 2a ist schematisch ein Teil des erfindungsgemäßen Siegels dargestellt. Von einem Verbindungselement 18 erstreckt sich ein Messelement 13, das ein erstes, ein zweites und ein drittes Messelement 13a, 13b, 13c umfasst. Das erste, zweite und dritte Messelement 13a, 13b, 13c sind jeweils als Leiterschleifen ausgebildet. Das erste, zweite und dritte Messelement 13a, 13b, 13c sind mit dem Verbindungselement 18 über eine Schnittstelleneinrichtung 16 verbunden. Die Schnittstelleneinrichtung 16 weist drei erste und drei zweite Schnittstellen 16a, 16b (jeweils durch schräge Schraffur gekennzeichnet) auf. Jede Leiterschleife bzw. jedes Messelement 13a, 13b, 13c ist jeweils mit einer der ersten und einer der zweiten Schnittstellen 16a, 16b verbunden. Die ersten und zweiten Schnittstellen 16a, 16b sind jeweils mit einer Messeinrichtung (nicht dargestellt), vorzugsweise eines Chips, verbunden. Die ersten und zweiten Schnittstellen 16a, 16b zu dem ersten, zweiten und dritten Messelement 13a, 13b, 13c sind jeweils nebeneinander angeordnet. Die ersten und zweiten Schnittstellen 16a, 16bwechseln sich in ihrer Lage ab.

In einer Ausführung kann vorgesehen sein, dass das erste, zweite und dritte Messelement 13a, 13b, 13c in Reihe geschaltet sind. Die zweite Schnittstelle 16b zum ersten Messelement 13a wäre mit der ersten Schnittstelle 16a zum zweiten Messelement 13b verbunden. Weiterhin wäre die zweite Schnittstelle 16b zum zweiten Messelement 13b mit der der ersten Schnittstelle 16a zum dritten Messelements 13c verbunden. Die erste Schnittstelle 16a zum ersten Messelements 13a sowie die zweite Schnittstelle 16b zum dritten Messelements 13c wären mit der Messeinrichtung verbunden. Die im Gesamten verfügbare Messstrecke ist verlängert.

Das erste, zweite und/oder dritte Messelement 13a, 13b, 13c sind vorzugsweise von einer Umhüllung umgeben (nicht dargestellt). Die Umhüllung kann das erste, zweite und/oder dritte Messelement 13a, 13b, 13c im Gesamten oder jedes Messelement 13a, 13b, 13c separat umgeben. Bei separater Umhüllung des ersten, zweiten und dritten Messelements 13a, 13b, 13c könnte das Verbindungselement 18 für jedes Messelement 13a, 13b, 13c eine separate Anschlussöffnung aufweisen.

In der Fig. 2b ist schematisch eine zur Fig. 2a alternative Ausführungsform dargestellt. Im Unterschied zur Ausführung gemäß Fig. 2a sind sie ersten Schnittstellen 16a nebeneinanderliegend angeordnet und die zweiten Schnittstellen 16b sind nebeneinanderliegend angeordnet. Jedes der Messelemente 13a, 13b, 13c ist an einem Ende mit einer zugeordneten ersten Schnittstelle 16a und an dem anderen Ende mit einer zugeordneten zweiten Schnittstelle 16b verbunden.

Im Vergleich zur Ausgestaltung gemäß Fig. 2a ist es einem Angreifer nach Durchtrennen des Befestigungselements nahezu unmöglich, die durchtrennten Messelemente 13a, 13b, 13c funktional wieder herzustellen bzw. zu verbinden. Insbesondere ist eine Zuordnung der durchtrennten Enden nur mit hohem Aufwand möglich. Das Siegel kann nach derartiger Manipulation bei einer Prüfung der Messelemente 13a, 13b, 13c die fehlerhafte Zuordnung als Fehler erkenn. Die Manipulation wird sicher erkannt.

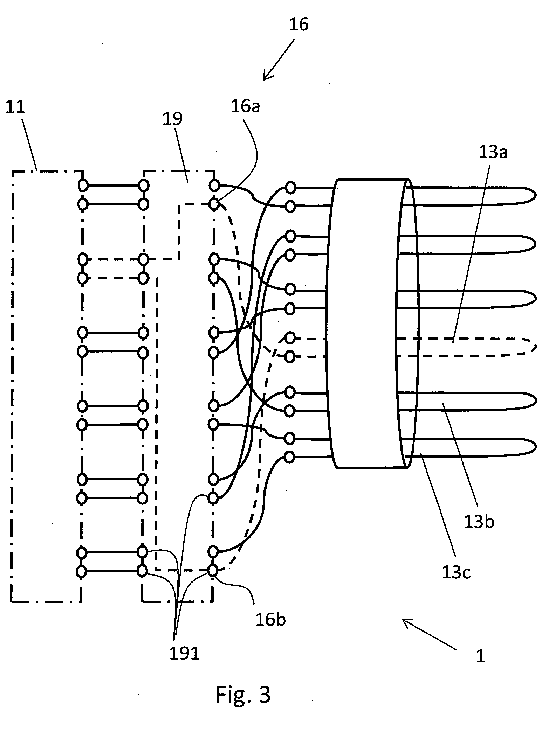

In der Fig.3 ist schematisch eine weitere Ausführungsform eines erfindungsgemäßen Siegels 1 dargestellt. Insbesondere wird in Fig. 3 im Detail eine Schnittstellenmatrix 19 einer Schnittstelleneinrichtung 16 aufgezeigt. Ein erste Messelement 13a ist mit einer ersten und einer zweiten Schnittstelle 16a, 16b der Schnittstelleneinrichtung 16 verbunden. Die Schnittstellenmatrix 19 verbindet die Anschlüsse eines Chips 11, welche der Messeinrichtung zugeordnet sind, mit der ersten und zweiten Schnittstelle 16a, 16b.

Das Messelement 13a kann mit beliebigen Schnittstellen 191 der Schnittstelleneinrichtung 16 verbunden werden.

Insbesondere bei der Herstellung des erfindungsgemäßen Siegels können die Leiterschleifen des ersten eines zweiten und dritten Messelements 13a, 13b, 13c willkürlich bzw. zufällig an einer Schnittstelle 191 der Schnittstelleneinrichtung 16 angeschlossen werden. Eine Konfigurationsmatrix legt die Zuordnungen in der Schnittstellenmatrix 19 fest. Über die Schnittstellenmatrix 19 werden Anschlüsse einer Messeinrichtung im Chip 11 Schnittstellen 191 der Schnittstellenmatrix 19 zugeordnet, so dass schließlich Anschlüsse der Messeinrichtung mit dem ersten, zweiten und dritten Messelements 13a, 13b, 13c zugeordnet werden. Die Schnittstellen 191 der Schnittstellenmatrix 19 sind jeweils somit als erste bzw. zweite Schnittstelle 16a, 16b der Schnittstelleneinheit des ersten, zweiten und/ oder dritten Messelements 13,13b, 13c festgelegt.

Ein Vorsortieren der Messelemente 13a, 13b, 13c bzw. der Leiterschleifen ist nicht notwendig. Nach dem Kontaktieren der Messelemente 13a, 13b, 13c mit den Schnittstellen 191 kann bspw. ein Lernvorgang der Konfigurationsmatrix ausgeführt werden, um das erste, zweite und/ oder dritte Messelement 13a, 13b, 13c entsprechend mit der Messeinrichtung zu verbinden. Dabei könnte bspw. wird ein Signal an einer zuvor festgelegten oder ausgewählten Schnittstelle 191, welche als erste Schnittstelle 16a festgelegt wird, angelegt werden. Die weiteren Schnittstellen 191 werden auf das Signal abgefragt. Die Schnittstelle 191, welche das entsprechende Signal aufweist, gilt als zweite Schnittstelle 16b zum ersten Messelement 13a. Analog wird die Schnittstellenmatrix 19 zu dem zweiten und dritten Messelement 13b, 13c konfiguriert, bspw. mittels Software. Die Konfigurationsmatrix kann bspw. in einem Speicher des Chips 11 abgelegt werden.

Mit Hilfe einer derartigen Konfigurationsmatrix können die Anschlüsse des ersten, zweiten und dritten Messelements 13a, 13b, 13c willkürlich mit der Schnittstelleneinrichtung 16 verbunden werden. Ein Angreifer, der bspw. das Befestigungselement 17 zerstört und entsprechend die Leiterschleifen der Messelemente 13a, 13b unterbricht, müsste zum Auslesen der Schnittstellenmatrix 19 auf den Chip 11 zugreifen. Einem Gut, das mit einem erfindungsgemäßen Siegel versiegelt ist, kann ein unberechtigter Zugriff nachgewiesen werden. Eine Manipulation des Siegels 1, ohne dass die Manipulation erkannt wird, ist mithilfe der Erfindung ausgeschlossen.

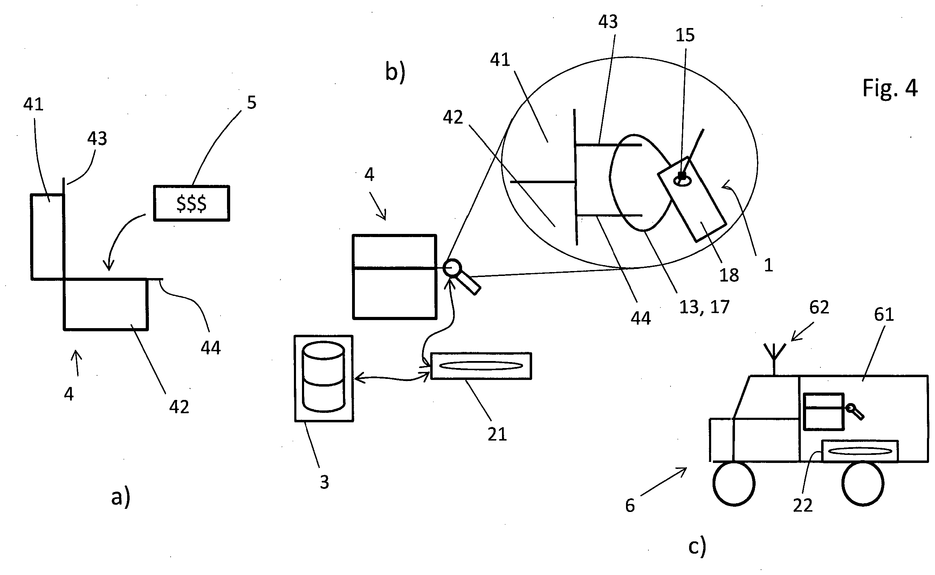

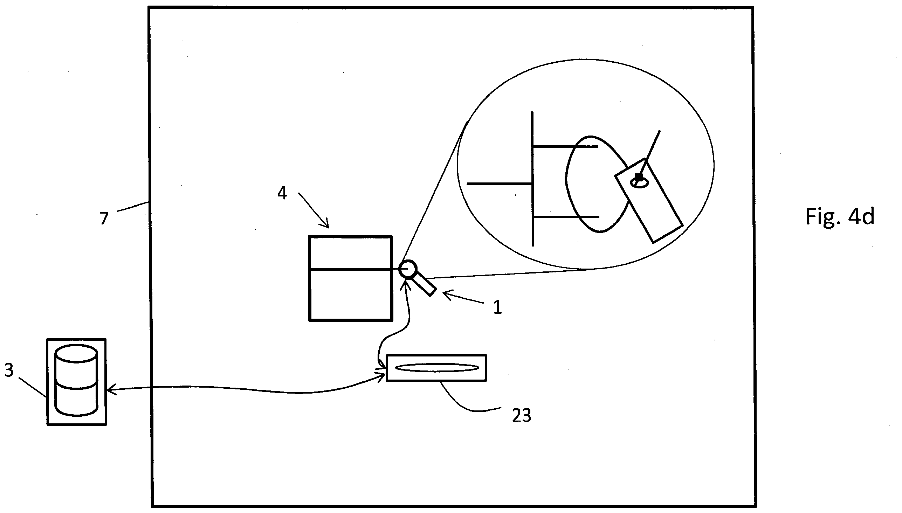

In der Fig. 4 ist ein mögliches Verfahren zum Versiegeln und Transport eines Guts dargestellt. Bei dem Gut handelt es sich beispielhaft um Banknoten 5.

In einem ersten Verfahrensschritt (Fig. 4a) werden die Banknoten 5 gebündelt in einer Transportkassette 4, z. B. Cash-Box, angeordnet. Die Transportkassette 4 umfasst ein Gehäuseoberteil 41 und ein Gehäuseunterteil 42. Das Gehäuseoberteil 41 und das Gehäuseunterteil 42 können zueinander angeordnet werden und bilden einen Aufnahmeraum zur Aufnahme der Banknoten 5. Sowohl das Gehäuseoberteil 41 als auch das Gehäuseunterteil 42 weisen einen oberen bzw. einen unteren Befestigungsflansch 43, 44 auf. Der obere Befestigungsflansch 43 und der untere Befestigungsflansch 44 ragen vom Gehäuseoberteil 41 bzw. vom Gehäuseunterteil 42 auf gleicher Seite der Transportkassette 4 ab. Sie sind ausgerichtet, dass sie bei geschlossener Transportkassette 4, d.h. das Gehäuseoberteil 41 liegt auf dem Gehäuseunterteil 42 auf, sich zumindest abschnittsweise decken.

In der Fig. 4b ist das Versiegeln der Transportkassette 4 dargestellt. Der obere Befestigungsflansch 43 und der untere Befestigungsflansch 44 weisen eine Öffnung auf, die bei geschlossener Transportkassette 4 zueinander fluchten. Ein Siegel 1, bspw. gemäß Fig. 1a bis c, wird an der Transportkassette 4 angeordnet. Das Siegel 1 weist ein Verbindungselement 18 auf, von dem sich ein langgestrecktes, flexibles streifenförmiges Befestigungselement 17 weg erstreckt. Das Befestigungselement 17 weist ein von einer Umhüllung umgebenes Messelement 13 auf. Das Verbindungselement 18 umfasst einen Chip und eine Antenne. Die Antenne dient der Versorgung des Chips mit elektrischer Energie und kontaktloser Kommunikation mit einer Lesevorrichtung 21.

Das Siegel 1 ist an der Transportkassette 4 angeordnet, indem das Befestigungselement 17 durch Öffnungen des oberen und unteren Befestigungsflansches 43, 44 hindurchgezogen und an einer Anschlussöffnung 15 des Verbindungselements 18 zerstörungsfrei unlösbar befestigt ist. Das Siegel 1 verhindert mechanisch ein Öffnen der Transportkassette 4 und versiegelt gleichzeitig diese. Bei dem Messelement 13 handelt es sich bspw. um eine Leiterschleife (s. Fig. 1c).

Nach dem Versiegeln der Transportkassette 4 durch das Siegel 1 wird mit Hilfe der Lesevorrichtung 21 der Chip des Siegels 1 kontaktlos ausgelesen. Eine Messeinrichtung in dem Siegel ermittelt eine elektrische Eigenschaft des Messelements 13, bspw. elektrischer Durchgang. Diese wird sowohl in einem Speicher des Chips als auch in einem Hintergrundsystem, bspw. eine externe Datenbank 3 auf einem Server, mit einer Kennung des Chips abgelegt. Der Server ist über ein Kommunikationsnetzwerk mit der ersten Lesevorrichtung 21 verbunden.

Nach dem mechanischen Versiegeln und Datenkommunikation wird die Transportkassette 4 einem Lieferwagen 6 übergeben (Fig. 4c). Der Lieferwagen 6 weist einen Transportraum 61 für die Transportkassette 4 auf. In oder bei dem Transportraum 61 befindet sich eine zweite Lesevorrichtung 22, mit der der Chip der Transportkassette 4 ausgelesen werden kann. Die zweite Lesevorrichtung 22 ist über eine Lieferwagenantenne 62 mit dem Hintergrundsystem verbunden. Eine Logistikfirma des Lieferwagens 6 kann bspw. auf das Hintergrundsystem zu Überprüfungs- und Überwachungszwecken zugreifen. Mit Auslesen des Siegels durch die zweite Lesevorrichtung 22 kann dem Hintergrundsystem mitgeteilt werden, dass sich die Transportkassette 4 in dem Lieferwagen 6 befindet. In Kombination mit einem GPS-System kann online, nämlich während des Transports, die exakte Position und der Zustand der Transportkassette 4 nachvollzogen werden. Wird das Siegel manipuliert, kann das Siegel und/ oder die zweite Lesevorrichtung 22 dem Hintergrundsystem sofort einen entsprechenden Manipulationshinweis senden.

Nachdem der Lieferwagen 6 an seinem Zielort angelangt ist, wird die Transportkassette 4 einem Eingangsbereich 7 übergeben (Fig. 4d). Eine dritte Lesevorrichtung 23 liest Daten aus dem Siegel 1 aus und sende diese an das Hintergrundsystem. Das Hintergrundsystem gleicht die ausgelesenen Daten mit der Datenbank 3 ab. Diese Daten umfassen bspw. die während des Versiegelns abgespeicherten Daten zur elektrischen Eigenschaft des Messelements des Siegels 1 (siehe Fig. 4b) sowie aktuell erneut gemessenen Eigenschaften des Messelements im Eingangsbereich 7. Wird eine Übereinstimmung der Messdaten vom Hintergrundsystem und/ oder von dem Siegel 1 bejaht, liegt keine Manipulation des Siegels 1 vor. Ermittelt das Siegel 1 eine andere Eigenschaft gegenüber der Messung aus Fig. 4b, liegen möglicherweise eine Manipulation des Siegels 1 und ein unerlaubter Zugriff auf die Banknoten 5 innerhalb der Transportkassette 4 vor.

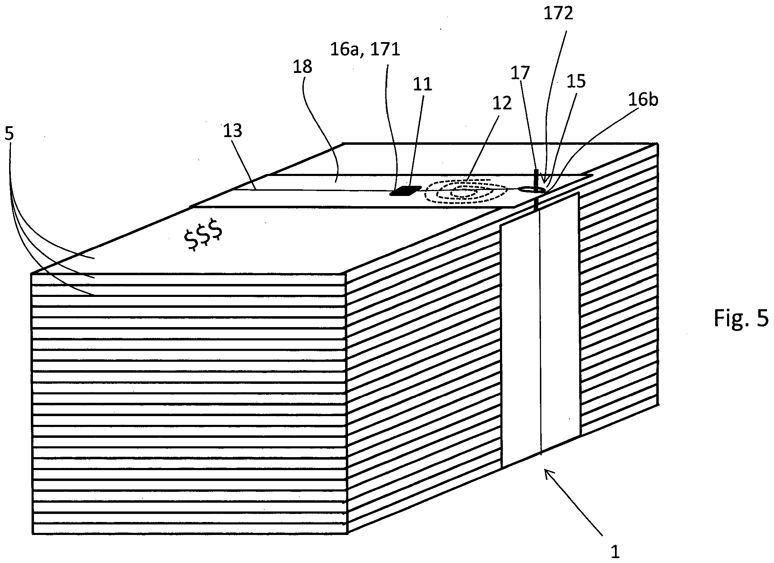

Die Fig. 5 zeigt eine weitere Darstellung zur Anwendung des erfindungsgemäßen Siegels 1. Das Siegel 1 weist ein Verbindungselement 18 und ein Befestigungselement 17 auf. Das Verbindungselement 18 ist bandartig ausgebildet. Das Verbindungselement 18 weist im Verhältnis zu seiner Breite eine große Längserstreckung und eine geringe Dicke auf. Zudem ist das Verbindungselement 18 in seiner Form flexibel. Das Verbindungselement 18 umfasst einen Chip 11 und eine mit dem Chip 11 verbundene Antenne 12. Weiterhin weist das Verbindungselement 18 an einem Ende eine Anschlussöffnung 15 auf. Das Befestigungselement 17 ragt vom Verbindungselement 18 an dem der Anschlussöffnung 15 gegenüberliegenden Ende ab.

Das Befestigungselement 17 umfasst ein Messelement 13, das von einer Umhüllung umgeben ist. Das Messelement 13 ist fest über eine erste Schnittstelle 16a mit dem Chip 11 verbunden und bildet an dieser Position einen ersten Befestigungselementkontaktabschnitt 171 des Befestigungselements 17. Vorliegend ist die erste Schnittstelle 16a unmittelbar am Chip 11 angeordnet. Die Anschlussöffnung 15 weist mehrere Schneid-/Klemmkontakte auf. Jeder der Schneid-/Klemmkontakte ist über eine elektrisch leitende Verbindung mit dem Chip 11 verbunden. Die Schneid-/Klemmkontakte bilden eine zweite Schnittstelle 16b.

Um einen Stapel von Banknoten 5 (Banknotenstapel), welcher eine bestimmte Anzahl an Banknoten 5 umfasst, zu versiegeln, kann das erfindungsgemäße Siegel 1 ähnlich einer Banderole an dem Banknotenstapel angeordnet werden. Zur Befestigung des Siegels 1 wird das Befestigungselement 17 durch die Anschlussöffnung 15 hindurchgeführt und an einem der Schneid-/ Klemmkontakte angeordnet. Die Schneid-/ Klemmkontakte durchdringen die Umhüllung 14 des Befestigungselements 17. An dieser Stelle wird die Position eines zweiten Befestigungselementkontaktabschnitts 172 des Befestigungselements zur Versiegelung exakt festgelegt. Die Schneid-/ Klemmkontakte stellen über die zweite Schnittstelle 16b eine Verbindung mit dem Chip 11 her. Eine Messeinrichtung in dem Chip 11 kann elektrische Eigenschaften über entsprechende Anschlüsse des Chips 11 und den Schnittstellen 16a, 16b sowie dem Messelement 13 bestimmen. Dieser Wert kann in dem Chip 11 abgespeichert werden.

Um eine Banknote aus dem Banknotenstapel 5 zu entnehmen, ist es erforderlich, das Siegel 1 zu öffnen. Das Befestigungselement 17 muss von den Schneid-/ Klemmkontakten in der Anschlussöffnung 15 gelöst werden. Ein erneutes Verschließen bzw. Versiegeln bedingt, dass das Befestigungselement 17 mit den Schneid-/Klemmkontakten an einer zur Erstversiegelung unterschiedlichen Position verbunden wird. Ein erneutes Auslesen des Chips 11 und somit erneutes Prüfen des Messelements 13 führt dazu, dass die Messeinrichtung 11 einen zweiten Messwert hinsichtlich des Messelements 13 bestimmt. Der Chip 11 vergleicht den gespeicherten Wert mit dem nun bestimmten Wert. Der zweite Messwert unterscheidet sich von dem bei der ersten Versiegelung gemessenen Wert. Aufgrund der Differenz der Messwerte erkennt der Chip 11, dass eine Manipulation des Siegels 1 mit hoher Wahrscheinlichkeit vorliegt. Der Chip 11 sendet dieses Ergebnis an ein Lesegerät.

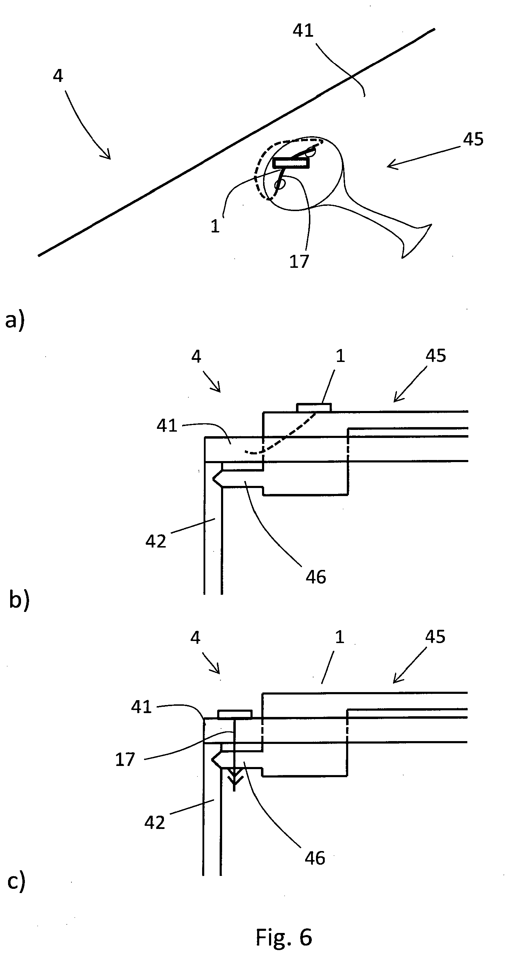

Die Fig. 6a und 6b zeigen eine weitere Anwendungsmöglichkeit des erfindungsgemäßen Siegels. An einer Transportkassette 4 ist an einem Gehäuseoberteil 41 (s. Bspw. Fig. 5a) ein Verriegelungshebel 45 angeordnet. Mit Hilfe des Verriegelungshebels 45 kann das Gehäuseoberteil 41 an dem Gehäuseunterteil 42 befestigt werden. Der Verriegelungshebel 45 ist drehbar gelagert und weist einen Riegel 46 auf, der an eine Seitenwand des Gehäuseunterteils 42 eingreift. Der Verriegelungshebel 45 und das Gehäuseoberteil 41 weisen jeweils zwei durchgehende Öffnungen auf, die ausgerichtet sind und ein gewundenes Kanalsystem im Gehäuseoberteil 41 bilden (gestrichelte Linie). Durch die beiden Öffnungen und durch das Kanalsystem ist ein Befestigungselement 17 eines Siegels 1 (vergleiche bspw. Fig. 1a, 1b oder Fig. 5) hindurch geführt. Das Siegel 1 sichert den Verriegelungshebel 45 in seiner geschlossenen Position.

Zum Öffnen der Transportkassette 4 ist ein Drehen des Verriegelungshebels 45 notwendig. Der Riegel 46 wird von der Gehäusewand des Gehäuseunterteils 42 wegbewegt. Das Befestigungselement 17 des Siegels 1 verhindert mechanisch ein Drehen des Verriegelungshebels 45. Damit der Verriegelungshebel 45 gedreht werden kann, ist eine Beschädigung des Siegels 1 im Bereich des Befestigungselements, notwendig, bspw. durch Auftrennen oder durch Abscheren während des Drehens des Verriegelungshebels 45. Mit Hilfe einer Messeinrichtung und eines Chips auf dem Verbindungselement kann eine derartige Beschädigung bzw. ein Angriff auf das Befestigungselement 17 detektiert werden.

Die Fig. 6c zeigt eine Alternative zu den Ausführungsbeispielen aus Fig. 6a und 6b. Der Gehäuseoberteil 41 weist eine Öffnung auf, die mit einer Öffnung im Riegel 46 fluchtet. Ein Siegel 1, bspw. gemäß Fig. 1c wird von Seiten des Gehäuseoberteils 41 in beide Öffnungen eingebracht und hintergreift den Riegel 46. Bei Drehen des Verriegelungshebels 45 wird das Befestigungselement 17 abgeschert, was durch die Messeinrichtung und/ oder den Chip detektiert werden kann.

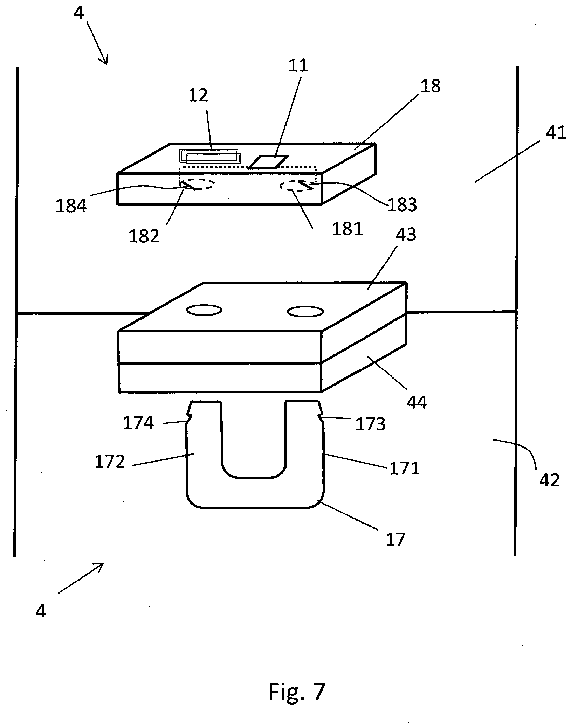

In der Fig. 7 ist eine alternative Ausführungsform des erfindungsgemäßen Siegels 1 dargestellt. Das erfindungsgemäße Siegel 1 wird an einem Behälter ähnlich der Fig. 4 angeordnet. Der Behälter ist in diesem Beispiel eine Transportkassette 4 und weist ein Gehäuseoberteil und ein Gehäuseunterteil 41, 42 auf. Das Gehäuseoberteil 41 weist einen oberen Befestigungsflansch 43 und das Gehäuseunterteil 42 weist einen unteren Befestigungsflansch 44 auf. Im geschlossenen Zustand einer Transportkassette 4 ist der obere Befestigungsflansch 43 deckungsgleich zum unteren Befestigungsflansch 44 angeordnet.

Sowohl der obere Befestigungsflansch 43 als auch der unter Befestigungsflansch 44 weisen zwei Durchgangsöffnungen auf, die zueinander fluchten.

Das Siegel 1 umfasst ein Verbindungselement 18 und ein Befestigungselement 17. Das Verbindungselement 18 ist quaderförmig ausgebildet. Es weist an einer Seite zwei Aufnahmeöffnungen 181, 182 auf, die in Ihrer Position den Durchgangsöffnungen des oberen Befestigungsflansches 43 entsprechen.

Des Weiteren weist das Verbindungselement 18 einen Chip 11 sowie eine Antenne 12 auf. Der Chip 11 ist sowohl mit der Antenne 12 als mit den Aufnahmeöffnungen 181, 182 verbunden. Insbesondere ist eine Messeinheit des Chips 11 mit den Aufnahmeöffnungen 181,182 verbunden.

Das Befestigungselement 17 ist U-förmig ausgebildet und weist zwei Schenkel 171, 172 auf. Die beiden Schenkel 171, 172 sind entsprechend den Öffnungen des oberen Befestigungsflansches 43 dimensioniert. Der Abstand der beiden Schenkel 171, 172 entspricht dem Abstand der Öffnungen des oberen Befestigungsflansches 43. Das Befestigungselement 17 ist aus einem elektrisch leitenden Werkstoff hergestellt und bildet zugleich das Messelement 13. Die Schenkel 171, 172 sind ebenfalls derart dimensioniert, dass sie in den Aufnahmeöffnungen 181, 182 des Verbindungselements 18 angeordnet werden können. In den Aufnahmeöffnungen 181, 182 befindet sich eine Rasteinheit 183,184, welche flexibel den Eingangsbereich der Aufnahmeöffnungen 181 bzw. 182 verringern kann. Die Enden der Schenkel 171, 172 sind leicht verjüngt ausgebildet und weisen zudem Rastkerben 173, 174 auf.

Zum Versiegeln der Transportkassette 4 wird das Befestigungselement 17 derart am unteren Befestigungsflansch 44 und oberen Befestigungsflansch 43 angeordnet, dass die Schenkel 171, 172 durch die Durchgangsöffnungen des unteren und oberen Befestigungsflansches 44, 43 hindurchragen. Weiterhin wird das Verbindungselement 18 auf das Befestigungselement 17 aufgesetzt, wobei die beiden Schenkel 171, 172 in die Aufnahmeöffnungen 181, 182 eindringen. Die Rasteinheiten 183,184 verrasten mit den Rastkerben 173,174, wodurch ein Entfernen des Befestigungselements 17 von dem Verbindungselement 18 zerstörungsfrei verhindert ist. D.h., ein Öffnen der Transportkassette 4, nämlich das Entfernen des Gehäuseoberteils 41 vom Gehäuseunterteil 42, ist nur möglich, wenn das Befestigungselement 17 geteilt oder das Befestigungselement 17 gewaltsam vom Verbindungselement 18 getrennt wird. Eine derartige Aktion beeinflusst einen Messwert, der zwischen den Anschluss-PINs zu den Anschlussöffnungen 181, 182 messbar ist. Selbst wenn eine entsprechende Manipulation durch Zusammenfügen des Befestigungselements repariert wird, ist eine Beeinträchtigung messbar erkennbar. Der Chip 1 kann eine derartige Manipulation feststellen. Eine sichere Überprüfung der Manipulation des Siegels ist gewährleistet.

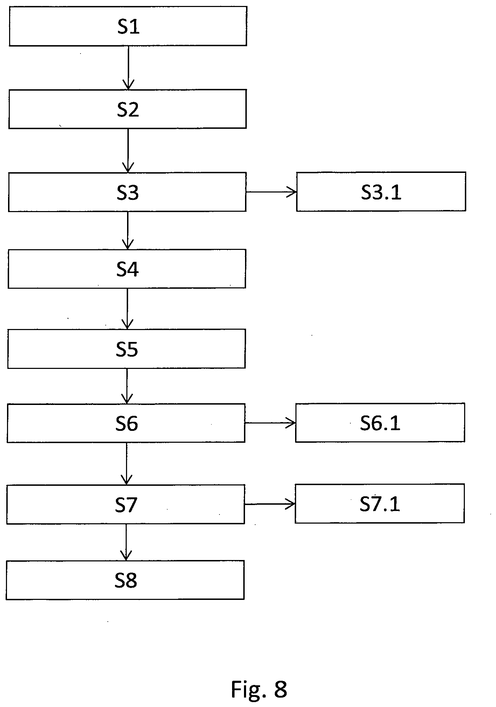

In der Fig. 8 ist ein Ablaufschema eines erfindungsgemäßen Verfahrens zum Prüfen eines Guts auf Manipulation mit einem erfindungsgemäßen Siegel dargestellt. Das Verfahren ist beispielhaft in zwei Abschnitte unterteil, nämlich Versiegeln (Schritte S1 bis S4) und Prüfen (S5 bis S8). In einem ersten Schritt S1 wird das Siegel an dem zu versiegelnden Gut angeordnet. Dabei wird das Gut versiegelt, so dass durch Siegel eine Manipulation des Guts eine Manipulation des Siegels bedingt. Eine Manipulation des Guts kann bspw. das Öffnen eines Gehäuses (das Gehäuse entspricht dem Gut) oder ein Entfernen eines Geldscheins aus einem Bündel von Geldscheinen (Bündel von Geldscheinen entspricht dem zu versiegelndem Gut) sein.

Das Siegel weist einen Chip auf. Weiterhin weist das Siegel ein Messelement auf, das bei einer Manipulation des zu versiegelnden Gutes wenigstens eine seiner physikalischen Eigenschaften, bspw. einen elektrischen Widerstand, verändert. Bei dem Messelement kann es sich bspw. um eine Leiterschleife, ein Drahtgeflecht, einen optischen oder akustischen Leiter oder einem sonstigen Medium handeln.

Nachdem das Siegel an dem zu versiegelndem Gut angeordnet ist, sendet ein Schreib-Lesegerät dem Chip eine Initialisierungsabfrage (S2). Die Initialisierungsabfrage betrifft das Bestimmen der physikalischen Eigenschaft des Siegels. Der Chip empfängt die Initialisierungsabfrage, wonach eine Messeinrichtung des Chips die physikalische Eigenschaft des Messelements initial bestimmt (S3). Diese physikalische Eigenschaft speichert der Chip in einem Schritt (S3.1) als Referenzwert ab.

Weiterhin erstellt der Chip eine Antwort (S4) auf die erste Abfrage im Schritt S2. In der ersten Antwort ist der Referenzwert enthalten. Weiterhin kann in dieser Antwort eine Identifikationsnummer oder ein sonstiger Identifikationswert enthalten sein.

Zum Prüfen, ob das Gut manipuliert wurde, sendet ein Schreib-Lesegerät eine Prüfabfrage an das Siegel (S5). Im Schritt S6 bestimmt das Siegel die physikalische Eigenschaft des Messelements als ersten Messwert. Der erste Messwert wird vom Chip mit dem Referenzwert verglichen (S6.1). Der Chip ermittelt aus dem Vergleichswert, ob eine Manipulation vorliegen könnte. Das Ergebnis des Vergleichs sowie den zweiten Messwert sendet der Chip als Antwort an das zweite Schreib-Lesegerät (S7).

Das zweite Schreib-Lesegerät übermittelt diese Daten an ein Hintergrundsystem und führt seinerseits nochmals einen Vergleich mit im Hintergrundsystem gespeicherten Daten, insbesondere dem ersten Messwert, durch (S7.1). Aus diesem Vergleich und/oder dem Vergleichsergebnis des Chips bestimmen das Hintergrundsystem und/oder das Schreib-Lesegerät, ob eine Manipulation des Siegels bzw. des zu versiegelnden Gutes vorliegt (S8). In anderen Worten, validieren der Chip, das Schreib-Lesegerät und/ oder das Hintergrundsystem eine potentielle Manipulation des Siegels. Sollte sich zwischen dem ersten Messwert und dem zweiten Messwert keine oder eine im bestimmten Rahmen befindliche Differenz ergeben, könnte der Chip, das Schreib-Lesegerät und/ oder das Hintergrundsystem zu dem Ergebnis kommen, dass keine Manipulation vorliegt.

Anstatt der Schritte S1 bis S4, wonach ein Referenzwert ermittelt wird, kann ein allgemeingültiger Wert oder Aussage, z.B. "Durchgang", im Chip und/ oder Hintergrundsystem gespeichert werden. Zum Versiegeln des Gutes können entsprechend die Schritte S1 bis S4 wegfallen. Darüber hinaus kann in einem Transportprozess oder Lagerprozess erforderlich sein, das Siegel mehrmals zu prüfen. Entsprechend kann bei erfolgreicher Prüfung, d.h. keine Manipulation liegt vor, die fortwährend ermittelte physikalische Eigenschaft des Messelements jedes Mal als neuen Referenzwert zu verwenden und bei erneuter, z.B. zweiter, Prüfung mit Schritt S5 zu beginnen. Weiterhin könnte der bisherige Referenzwert beigehalten werden und ebenfalls einer erneute Prüfung mit Schritt S5 begonnen werden. Eine neue Verwendung des Siegels könnte ein Rücksetzen bzw. Erneuerung des Referenzwerts vorzugsweise durch eine berechtigte Person/ System erfordern.

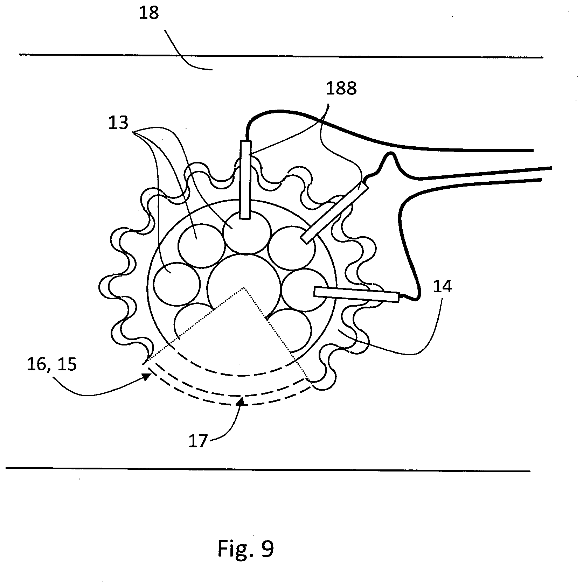

Die Figur 9 zeigt ein Ausführungsbeispiel eines Siegels im versiegelten Zustand, d.h., das Verriegelungselement 18 kontaktiert das erste und/ oder das zweite Befestigungselement 17. Insbesondere wird in Figur 9 eine besondere Ausgestaltung der Schnittstelle 16 und/ oder Anschlussöffnung 15 in Zusammenhang mit einem Befestigungselement 17 gezeigt. Das Siegel kann gemäß der Figur 1a-c bzw. den Figuren 6 bis 7 ausgebildet sein. Eine Umhüllung 14 des Befestigungselements 17 umgibt eine Vielzahl an Messelemente 13 und ist mit einer Profilierung versehen. In dem Befestigungselement 17 verlaufen mehrere Messelemente 13. In diesem Ausführungsbeispiel ist zur Vereinfachung nur ein Ausschnitt des Verriegelungselements 18 und des Befestigungselements 17 dargestellt.

Grundsätzlich kann die Profilierung sich über den gesamten Umfang der Umhüllung 14 erstrecken oder nur partiell ausgebildet sein. Weiterhin kann die Umhüllung in anderer Struktur, beispielsweise als Stege, Dreiecke oder Punkte ausgebildet sein. Das Verbindungselement 18, insbesondere die Schnittstelle 16 und/oder Anschlussöffnung 15 zum Kontaktieren des Befestigungselements 17, beispielsweise erster oder zweiter Befestigungselementkontaktabschnitt 171, 172 (s. Fig. 1b, 1c) sind komplementär zur Profilierung des Befestigungselements 17 ausgebildet.

Das Verbindungselement 18 weist mehrere Schneidkontakte 188 auf, welche jeweils in die Umhüllung 14 des Befestigungselements 17 und eines der Messelemente 13 eindringen und das entsprechende Messelement 13 kontaktieren. Über die Schneidelemente 188 wird ein Kontakt zu der Schnittstelleneinrichtung 16 hergestellt. Aufgrund der Profilierung ist eine Zuordnung von Messelementen 13 zu Schneidkontakten 188 möglich, so dass ein unbeabsichtigtes kontaktieren von mehreren Messelemente 13 durch einen Schneidkontakt 188 sowie ein ungewolltes Nichtkontaktieren durch einen Schneidkontakt 188 verhindert wird. Somit ist ein definiertes Kontaktieren oder nichtKontaktieren möglich. Die Schneidkontakte 188 können derart angeordnet sein, dass beispielsweise bei der Ausbildung der Anschlussöffnung 15 der zweite Befestigungselementkontaktabschnitt 172 in die Anschlussöffnung 15 eingeführt werden kann, jedoch gegen ein Wieder-herausziehen gesichert ist. Insbesondere kann beim Einführen das Befestigungselement 17 sich im Wesentlichen frei in Einführrichtung bewegen, wobei die Schneidkontakte 188 nicht die Umhüllung 14 verletzen, jedoch bei einer Bewegung entgegen der Einführrichtung in die Umhüllung 14 eindringen und sowohl entsprechend ein Messelement 13 kontaktieren und das Befestigungselement 17 arretieren.

Bei einem Entfernen des Befestigungselements 17 von dem Verbindungselement 18 und entsprechend einer Manipulation kann zwar das Befestigungselement 17 wieder mit dem Verbindungselement 18 in Kontakt gebracht werden, jedoch ist eine gleiche Positionierung, insbesondere bei umlaufender Profilierung erschwert. Bei bevorzugt vorgespannter Anordnung der Messelemente 13 ist zudem bei einem Auftrennen der Messelemente 13 eine Zuordnung von Messelement 13 zu Schneidkontakt 188 nahezu unmöglich. Bei Auswerten der Schneidkontakte 188 im Bezug zu den Messelementen 13 ist eine Manipulation sicher erkennbar.

Es ist dem Fachmann verständlich, dass die Profilierung am ersten und/ oder an einem zweiten Befestigungselementkontaktabschnitt 171,172 vorgesehen sein kann.

Der Fachmann wird erkennen, dass die Funktionen, Ausgestaltungen und Verfahren des vorstehend beschriebenen Siegels und Varianten zum Anordnen und Prüfen eines Siegels stark variieren können. Insbesondere ist durch die vorangehenden Figuren lediglich ein Auszug an Möglichkeiten gezeigt worden. Selbstverständlich können auch Kombinationen aus Merkmalen der vorgegangenen Beschreibungen möglich sein.

## Patentansprüche

1. Verfahren zum Versiegeln und Prüfen eines Guts auf Manipulation mit einem Siegel (1), wobei das Siegel (1) eine Antenne (12), einen Chip (11), ein Messelement (13, 13a, 13b, 13c), das angepasst ist, dass es bei einer Manipulation des Siegels (1) und/oder Guts eine bestimmte physikalische Eigenschaft ändert, eine Schnittstelleneinrichtung (16), und eine Messeinrichtung, die dazu geeignet ist, die physikalische Eigenschaft des Messelements (13, 13a, 13b, 13c) zu bestimmen, umfasst, wobei das Verfahren die Schritte aufweist:
- Anordnen (S1) des Siegels (1) an das zu versiegelnde Gut, wodurch das Gut mechanisch versiegelt ist;
- Empfangen (S5) einer Prüfabfrage mittels kontaktloser Datenübertragung von einem Schreib-Lesegerät (2) durch das Siegel (1);
- Bestimmen (S6) der physikalischen Eigenschaft des Messelements (13, 13a, 13b, 13c) als ersten Messwert durch das Siegel (1);
- Erstellen einer Antwort (S7) auf die Abfrage durch den Chip (11)
- kontaktloses Senden der Antwort an das Schreib-Lesegerät (2), wobei die Antwort des Chips (11) den ersten Messwert betrifft; und
- Vergleichen (S6.1, S7.1) des ersten Messwerts mit einem Referenzwert;
wobei während des Versiegelns ein Schritt des Konfigurierens der Schnittstelleneinrichtung (16) des Chips (11) entsprechend dem Messelement (13, 13a, 13b, 13c) durchgeführt wird und beim Konfigurieren einer Konfigurationsmatrix (19) der Schnittstelleneinrichtung (16) das Messelement (13, 13a, 13b, 13c), oder Anschlüsse davon, einer Schnittstelle (191, 16a, 16b) der Schnittstelleneinrichtung (16), welche das Messelement (13, 13a, 13b, 13c) und den Chip (11) verbindet, zugeordnet wird.

2. Verfahren nach Anspruch 1, **dadurch gekennzeichnet, dass** der Chip (11) den ersten Messwert speichert und/ oder an ein Hintergrundsystem, insbesondere ein Benutzergerät und/ oder einen Server (3), übermittelt (S7).

3. Verfahren nach Anspruch 1 oder 2, **gekennzeichnet durch** die Schritte:
- Setzen des ersten Messwerts als Referenzwert (S3.1)
- Empfangen einer zweiten Abfrage von einem Schreib-Lesegerät (2) durch das Siegel (1)
- Zweites Bestimmen (S6) der physikalischen Eigenschaft des Messelements (13, 13a, 13b, 13c) als zweiten Messwert durch das Siegel (1); und
- Vergleichen des zweiten Messwerts mit dem Referenzwert.

4. Verfahren nach einem der vorhergehenden Ansprüche, **dadurch**
**gekennzeichnet, dass** die Messeinrichtung während des Versiegelns die physikalische Eigenschaft des Messelements (13, 13a, 13b, 13c) bestimmt (S3).

5. Verfahren nach einem der vorhergehenden Ansprüche, **dadurch**
**gekennzeichnet, dass** auf die Prüfabfrage die Antwort an das Schreib-Lesegerät (2) durch den Chip (11) die physikalische Eigenschaft des Messelements (13, 13a, 13b, 13c) umfasst und die Antwort an das Schreib-Lesegerät (2) gesendet (S7) wird.

6. Verfahren nach einem der vorhergehenden Ansprüche, **dadurch**
**gekennzeichnet, dass** eine physikalische Zuordnung von Messelement (13, 13a, 13b, 13c) zu Schnittstelleneinrichtung (16) und/ oder der Schnittstelle (191, 16a, 16b) während des Betriebes des Chips (11) erfolgt und bei nicht-Betrieb des Chips (11) die physikalische Zuordnung aufgehoben wird.

7. Verfahren nach einem der vorhergehenden Ansprüche, **dadurch**
**gekennzeichnet, dass** das Gut ein Behältnis, vorzugsweise eine Transportkassette (4), ist, vor dem Versiegeln ein Wertelement in dem Behältnis angeordnet wird und das Siegel (1) am Gut angeordnet wird und ein Zugriff auf den Chip verhindert wird.

8. Siegel (1), umfassend
ein Befestigungselement (17), ein Verbindungselement (18), einen Chip (11), eine Antenne (12) und eine Messeinrichtung; wobei
das Befestigungselement (17) ein Messelement (13, 13a, 13b, 13c) umfasst und sich das Messelement (13, 13a, 13b, 13c) in Längsrichtung des Befestigungselements (17) erstreckt, und einen ersten Befestigungselementkontaktabschnitt (171) und einen zweiten Befestigungselementkontaktabschnitt (172) aufweist;
das Verbindungselement (18) zum mechanischen Kontaktieren des ersten Befestigungselementkontaktabschnitts (171) und des zweiten Befestigungselementkontaktabschnitts (172) ausgebildet ist, die Messeinrichtung über eine Schnittstelleneinrichtung (16) des Chip mit dem Messelement (13, 13a, 13b, 13c) verbunden ist, wobei die Messeinrichtung dazu geeignet ist, eine bestimmte physikalische Eigenschaft des Messelements (13, 13a, 13, 13c) zu bestimmen,
**dadurch gekennzeichnet, dass**
die Schnittstelleneinrichtung (16) eine Konfigurationsmatrix (19) umfasst, durch welche die Schnittstelleneinrichtung (16) konfigurierbar ausgebildet ist, wobei die Konfigurationsmatrix (19) ausgebildet ist, das Messelement (13, 13a, 13b, 13c) mit einer Schnittstelle (16a, 16b) der Schnittstelleneinrichtung (16) zu verbinden.

9. Siegel (1) nach Anspruch 8, **dadurch gekennzeichnet, dass** das Befestigungselement langgestreckt, vorzugsweise streifenförmig und/ oder flexibel ausgebildet ist.

10. Siegel (1) nach Anspruch 8 oder 9, **dadurch gekennzeichnet, dass** das Messelement (13, 13a, 13b, 13c) als elektrischer und/ oder optischer Leiter, vorzugsweise als Leiterschleife, ausgebildet ist.

11. Siegel (1) nach einem der Ansprüche 8 bis 10, **dadurch gekennzeichnet, dass** das flexible, langgestreckte Befestigungselement (17) eine Umhüllung (14) umfasst, die zumindest partiell das Messelement (13, 13a, 13b, 13c) umgibt.

12. Siegel (1) nach einem der Ansprüche 8 bis 11, **dadurch gekennzeichnet, dass** der erste Befestigungselementkontaktabschnitt (171) und der zweite Befestigungselementkontaktabschnitt (172) in Längsrichtung des Befestigungselements (17) voneinander beabstandet sind.

13. Siegel (1) nach einem der Ansprüche 8 bis 12, **dadurch gekennzeichnet, dass** über den ersten Befestigungselementkontaktabschnitt (171) und den zweiten Befestigungselementkontaktabschnitt (172) die Schnittstelleneinrichtung (16) mit dem Messelement (13, 13a, 13b, 13c) verbunden ist.

14. Siegel (1) nach einem der Ansprüche 8 bis 13, **dadurch gekennzeichnet, dass** sich zwischen der maximalen Entfernung des Messelements (13, 13a, 13b, 13c) vom ersten Befestigungselementkontaktabschnitt (171) zum zweiten Befestigungselementkontaktabschnitt (172) ein messelementfreier Raum ausgebildet ist, der das Messelement (13, 13a, 13b, 13c) nicht umfasst.

15. Siegel (1) nach Anspruch 10 und 14, dass die Leiterschleife im Befestigungselement (17) einen Umkehrpunkt aufweist, wobei der Umkehrpunkt die maximale Entfernung bzw. Längserstreckung des Messelements (13, 13a, 13b, 13c) im Befestigungselement (17) zum Befestigungselementkontaktabschnitt (171) festlegt und vorzugsweise die Entfernung des zweiten Befestigungselementkontaktabschnitts (172) vom ersten Befestigungselementkontaktabschnitt (171) kleiner als die maximale Entfernung bzw. Längserstreckung des Messelements (13, 13a, 13b, 13c) im Befestigungselement (17) ist.

16. Siegel (1) nach einem der Ansprüche 8 bis 15, **dadurch gekennzeichnet, dass** die Schnittstelleneinrichtung (16) eine Schnittstelle (16a, 16b) aufweist, die als Klemmvorrichtung, insbesondere als Schneidklemmvorrichtung und/ oder als Lamellenkontakt ausgebildet ist.

17. Siegel (1) nach einem der Ansprüche 8 bis 16, **dadurch gekennzeichnet, dass** der Chip (11) einen Speicher zum Speichern der physikalischen Eigenschaft des Messelements (13, 13a, 13b, 13c) aufweist.

18. Siegel (1) nach einem der Ansprüche 8 bis 17, **dadurch gekennzeichnet, dass** das flexible, langgestreckte Befestigungselement (17) wenigstens zwei Messelemente (13, 13a, 13b, 13c) umfasst, wobei vorzugsweise die wenigstens zwei Messelemente (13, 13a, 13b, 13c) von jeweils von einer Umhüllung umgeben sind und/ oder mit einer vorgespannten Verdrillung zueinander und/ oder zum Befestigungselement angeordnet sind.

19. Siegel (1) nach einem der Ansprüche 8 bis 18, **dadurch gekennzeichnet, dass** die Messeinrichtung zur Bestimmung eines elektrischen Widerstandes, einer Kapazität und/ oder einer Wegstrecke ausgebildet ist.

20. Siegel (1) nach einem der Ansprüche 8 bis 19, **dadurch gekennzeichnet, dass** das Befestigungselement (17) als Lasche, ausgebildet ist.

21. Siegel (1) nach einem der Ansprüche 8 bis 20, **dadurch gekennzeichnet, dass** das Befestigungselement (17) zerstörungsfrei unlösbar mit der Schnittstelleneinheit (16) verbunden ist.

22. Siegel (1) nach einem der Ansprüche 8 bis 21, **dadurch gekennzeichnet, dass** das Siegel (1) modular aufgebaut ist, wobei das Befestigungselement (17) und das Verbindungselement (18) vorzugsweise zerstörungsfrei unlösbar miteinander verbunden sind.

23. Siegel (1) nach einem der Ansprüche 8 bis 22, **dadurch gekennzeichnet, dass** das Befestigungselement (17) einen starren Abschnitt, insbesondere einen Bügel, umfasst.

## Claims

1. A method for sealing and checking a product for manipulation with a seal (1), wherein the seal (1) comprises an antenna (12), a chip (11), a measuring element (13, 13a, 13b, 13c) which is adapted that it changes a particular physical property upon a manipulation of the seal (1) or product, an interface device (16) and a measurement device which is suitable to determine the physical property of the measuring element (13, 13a, 13b, 13c), wherein the method has the following steps:
- arranging (S1) the seal (1) at the product to be sealed, thereby sealing the product mechanically;
- receiving (S5), by the seal (1), a check query by means of contactless data transmission from a read-write device (2);
- determining (S6), by the seal (1), the physical property of the measuring element (13, 13a, 13b, 13c) as a first measurement value;
- preparing a response (S7) to the query by the chip (11);
- contactlessly sending the response to the read-write device (2), the response of the chip (11) relating to the first measurement value; and
- comparing (S6.1, S7.1) the first measurement value to a reference value;
wherein during sealing a step of configuring the interface device (16) of the chip (11) according to the measuring element (13, 13a, 13b, 13c) is carried out and upon configuring of a configuration matrix (19) of the interface device (16) the measuring element (13, 13a, 13b, 13c), or terminals thereof, is/are associated with an interface (191, 16a, 16b) of the interface device (16) which connects the measuring element (13, 13a, 13b, 13c) and the chip (11).

2. The method according to claim 1, **characterized in that** the chip (11) stores the first measurement value and/or transfers it to a background system, in particular a user device and/or a server (3) (S7).

3. The method according to claim 1 or 2, **characterized by** the steps of:
- setting the first measurement value as a reference value (S3.1);
- receiving, by the seal (1), a second query from a read-write device (2);
- second determining (S6), by the seal (1), the physical property of the measuring element (13, 13a, 13b, 13c) as a second measurement value; and
- comparing the second measurement value to the reference value.

4. The method according to any of the preceding claims, **characterized in that** the measurement device determines (S3) the physical property of the measuring element (13, 13a, 13b, 13c) during the sealing.

5. The method according to any of the preceding claims, **characterized in that** upon the check query the response to the read-write device (2) by the chip (11) comprises the physical property of the measuring element (13, 13a, 13b, 13c) and the response is sent (S7) to the read-write device (2).

6. The method according to any of the preceding claims, **characterized in that** a physical association of measuring element (13, 13a, 13b, 13c) with interface device (16) and/or the interface (191, 16a, 16b) is effected during the operation of the chip (11) and upon non-operation of the chip (11) the physical association is eliminated.

7. The method according to any of the preceding claims, **characterized in that** the product is a container, preferably a transport cassette (4), before the sealing a value element is arranged in the container and the seal (1) is arranged at the product and an access to the chip is prevented.

8. A seal (1), comprising
a fastening element (17), a connection element (18), a chip (11), an antenna (12) and a measurement device; wherein
the fastening element (17) comprises a measuring element (13, 13a, 13b, 13c) and the measuring element (13, 13a, 13b, 13c) extends in the longitudinal direction of the fastening element (17), and has a first fastening element contact portion (171) and a second fastening element contact portion (172);
the connection element (18) is formed for mechanically contacting the first fastening element contact portion (171) and the second fastening element contact portion (172), the measurement device is connected via an interface device (16) of the chip with the measuring element (13, 13a, 13b, 13c), the measurement device being suitable for determining a particular physical property of the measuring element (13, 13a, 13b, 13c), **characterized in that**
the interface device (16) comprises a configuration matrix (19) through which the interface device (16) is formed to be configurable, the configuration matrix (19) being formed to connect the measuring element (13, 13a, 13b, 13c) with an interface (16a, 16b) of the interface device (16).

9. The seal (1) according to claim 8, **characterized in that** the fastening element is formed to be elongate, preferably strip-shaped and/or flexible.

10. The seal (1) according to claim 8 or 9, **characterized in that** the measuring element (13, 13a, 13b, 13c) is formed as an electrical and/or optical conductor, preferably as a conductor loop.

11. The seal (1) according to any of claims 8 to 10, **characterized in that** the flexible, elongate fastening element (17) comprises an enclosure (14) which surrounds the measuring element (13, 13a, 13b, 13c) at least partly.

12. The seal (1) according to any of claims 8 to 11, **characterized in that** the first fastening element contact portion (171) and the second fastening element contact portion (172) are spaced apart from each other in the longitudinal direction of the fastening element (17).

13. The seal (1) according to any of claims 8 to 12, **characterized in that** via the first fastening element contact portion (171) and the second fastening element contact portion (172) the interface device (16) is connected with the measuring element (13, 13a, 13b, 13c).

14. The seal (1) according to any of claims 8 to 13, **characterized in that** between the maximum distance of the measuring element (13, 13a, 13b, 13c) from the first fastening element contact portion (171) to the second fastening element contact portion (172) there is formed a space free from measuring elements which does not comprise the measuring element (13, 13a, 13b, 13c).

15. The seal (1) according to claim 10 and 14, that the conductor loop in the fastening element (17) has a return point, wherein the return point specifies the maximum distance or longitudinal extension of the measuring element (13, 13a, 13b 13c) in the fastening element (17) to the fastening element contact portion (171) and preferably the distance of the second fastening element contact portion (172) from the first fastening element contact portion (171) is smaller than the maximum distance or longitudinal extension of the measuring element (13, 13a, 13b, 13c) in the fastening element (17).

16. The seal (1) according to any of claims 8 to 15, **characterized in that** the interface device (16) has an interface (16a, 16b) which is formed as a clamping apparatus, in particular as a cutting and clamping apparatus and/or as a lamella contact.

17. The seal (1) according to any of claims 8 to 16, **characterized in that** the chip (11) has a memory for storing the physical property of the measuring element (13, 13a, 13b, 13c).

18. The seal (1) according to any of claims 8 to 17, **characterized in that** the flexible, elongate fastening element (17) comprises at least two measuring elements (13, 13a, 13b, 13c), wherein preferably the at least two measuring elements (13, 13a, 13b, 13c) are respectively surrounded by an enclosure and/or are arranged with a biased twisting to each other and/or to the fastening element.

19. The seal (1) according to any of claims 8 to 18, **characterized in that** the measurement device is formed for determining an electric resistance, a capacitance and/or a path length.

20. The seal (1) according to any of claims 8 to 19, **characterized in that** the fastening element (17) is formed as a strap.

21. The seal (1) according to any of claims 8 to 20, **characterized in that** the fastening element (17) is non-destructively undetachably connected with the interface unit (16).

22. The seal (1) according to any of claims 8 to 21, **characterized in that** the seal (1) is constructed in modular fashion, the fastening element (17) and the connection element (18) being preferably non-destructively undetachably connected with each other.

23. The seal (1) according to any of claims 8 to 22, **characterized in that** the fastening element (17) comprises a rigid portion, in particular a bracket.

## Revendications

1. Procédé de scellage et d'examen d'un bien pour discerner s'il a été sujet à manipulation, à l'aide d'un sceau (1), cependant que le sceau (1) comprend une antenne (12), une puce (11), un élément de mesure (13, 13a, 13b, 13c) adapté à, lors d'une manipulation du sceau (1) et/ou du bien, modifier une propriété physique déterminée, un équipement d'interface (16), et un équipement de mesure approprié à déterminer la propriété physique de l'élément de mesure (13, 13a, 13b, 13c), cependant que le procédé comporte les étapes :
- agencement (S1) du sceau (1) au bien à sceller, ce par quoi le bien est scellé mécaniquement ;
- réception (S5), par le sceau (1), d'une demande d'examen, par transmission de données sans contact depuis un appareil d'écriture-lecture (2) ;
- détermination (S6), par le sceau (1), de la propriété physique de l'élément de mesure (13, 13a, 13b, 13c) en tant que première valeur de mesure ;
- génération (S7), par la puce (11), d'une réponse à la demande
- envoi sans contact de la réponse à l'appareil d'écriture-lecture (2), cependant que la réponse de la puce (11) concerne la première valeur de mesure ; et
- comparaison (S6.1, S7.1) de la première valeur de mesure avec une valeur de référence ; cependant que, pendant le scellage, une étape de configuration de l'équipement d'interface (16) de la puce (11) est effectuée en fonction de l'élément de mesure (13, 13a, 13b, 13c), et, lors de la configuration d'une matrice de configuration (19) de l'équipement d'interface (16), l'élément de mesure (13, 13a, 13b, 13c) ou des raccordements de ce dernier est/sont affecté(s) à une à interface (191, 16a, 16b) de l'équipement d'interface (16) qui relie l'élément de mesure (13, 13a, 13b, 13c) et la puce (11).

2. Procédé selon la revendication 1, **caractérisé en ce que** la puce (11) mémorise la première valeur de mesure et/ou la transmet (S7) à un système d'arrière-plan, en particulier un appareil d'utilisateur et/ou un serveur (3).

3. Procédé selon la revendication 1 ou 2, **caractérisé par** les étapes :
- définition de la première valeur de mesure comme valeur de référence (S3.1)
- réception, par le sceau (1), d'une deuxième demande d'un appareil d'écriture-lecture (2)
- deuxième détermination (S6), par le sceau (1), de la propriété physique de l'élément de mesure (13, 13a, 13b, 13c) en tant que deuxième valeur de mesure ; et
- comparaison de la deuxième valeur de mesure avec la valeur de référence.

4. Procédé selon une des revendications précédentes, **caractérisé en ce que** l'équipement de mesure détermine (S3) pendant le scellage la propriété physique de l'élément de mesure (13, 13a, 13b, 13c).

5. Procédé selon une des revendications précédentes, **caractérisé en ce que**, suite à la demande d'examen, la réponse de la part de la puce (11) à l'appareil d'écriture-lecture (2) comprend la propriété physique de l'élément de mesure (13, 13a, 13b, 13c) et la réponse est envoyée (S7) à l'appareil d'écriture-lecture (2).

6. Procédé selon une des revendications précédentes, **caractérisé en ce qu'**une affectation physique d'élément de mesure (13, 13a, 13b, 13c) à équipement d'interfaces (16) et/ou à l'interface (191, 16a, 16b) a lieu pendant le fonctionnement de la puce (11) et l'affectation physique est supprimée lors du non-fonctionnement de la puce (11).

7. Procédé selon une des revendications précédentes, **caractérisé en ce que** le bien est un contenant, de préférence une cassette de transport (4), que, avant le scellage, un élément de valeur est agencé dans le contenant et le sceau (1) est agencé au bien et un accès à la puce est empêché.

8. Sceau (1), comprenant
un élément de fixation (17), un élément de liaison (18), une puce (11), une antenne (12) et un équipement de mesure ; cependant que
l'élément de fixation (17) comprend un élément de mesure (13, 13a, 13b, 13c) et l'élément de mesure (13, 13a, 13b, 13c) s'étend en direction longitudinale de l'élément de fixation (17) et comprend une première section de contact d'élément de fixation (171) et une deuxième section de contact d'élément de fixation (172) ;
l'élément de liaison (18) est réalisé pour une entrée en contact mécanique de la première section de contact d'élément de fixation (171) et de la deuxième section de contact d'élément de fixation (172), l' équipement de mesure est relié à l'élément de mesure (13, 13a, 13b, 13c) par l'intermédiaire d'un équipement d'interface (16) de la puce, cependant que l' équipement de mesure est adapté à déterminer une propriété physique déterminée de l'élément de mesure (13, 13a, 13b, 13c),
**caractérisé en ce que** l'équipement d'interface (16) comprend une matrice de configuration (19) par laquelle l'équipement d'interface (16) est réalisé de manière configurable, cependant que la matrice de configuration (19) est réalisée pour relier l'élément de mesure (13, 13a, 13b, 13c) à une interface (16a, 16b) de l'équipement d'interface (16).

9. Sceau (1) selon la revendication 8, **caractérisé en ce que** l'élément de fixation est réalisé de manière allongée, de préférence en ruban et/ou flexible.

10. Sceau (1) selon la revendication 8 ou 9, **caractérisé en ce que** l'élément de mesure (13, 13a, 13b, 13c) est réalisé sous forme de conducteur électrique et/ou optique, de préférence sous forme de boucle conductrice.

11. Sceau (1) selon une des revendications de 8 à 10, **caractérisé en ce que** l'élément de fixation (17) allongé flexible comprend une enveloppe (14) qui entoure au moins partiellement l'élément de mesure (13, 13a, 13b, 13c).

12. Sceau (1) selon une des revendications de 8 à 11, **caractérisé en ce que** la première section de contact d'élément de fixation (171) et la deuxième section de contact d'élément de fixation (172) sont espacées l'une de l'autre dans la direction longitudinale de l'élément de fixation (17).

13. Sceau (1) selon une des revendications de 8 à 12, **caractérisé en ce que**, par l'intermédiaire de la première section de contact d'élément de fixation (171) et de la deuxième section de contact d'élément de fixation (172), l'équipement d'interface (16) est relié à l'élément de mesure (13, 13a, 13b, 13c).

14. Sceau (1) selon une des revendications de 8 à 13, **caractérisé en ce que**, entre la distance maximale de l'élément de mesure (13, 13a, 13b, 13c) de la première section de contact d'élément de fixation (171) à la deuxième section de contact d'élément de fixation (172), un espace sans élément de mesure, ne comprenant pas l'élément de mesure (13, 13a, 13b, 13c), est réalisé.

15. Sceau (1) selon la revendication 10 et 14, dans lequel la boucle conductrice comporte dans l'élément de fixation (17) un point d'inversion, cependant que le point d'inversion fixe la distance maximale ou l'extension longitudinale de l'élément de mesure (13, 13a, 13b, 13c) dans l'élément de fixation (17) par rapport à la première section de contact d'élément de fixation (171), et, de préférence, la distance de la deuxième section de contact d'élément de fixation (172) par rapport à la première section de contact d'élément de fixation (171) est inférieure à la la distance maximale ou à l'extension longitudinale de l'élément de mesure (13, 13a, 13b, 13c) dans l'élément de fixation (17).

16. Sceau (1) selon une des revendications de 8 à 15, **caractérisé en ce que** l'équipement d'interface (16) comporte une interface (16a, 16b) réalisée sous forme de dispositif de serrage, en particulier sous forme de dispositif auto-dénudant et/ou sous forme de contact à lamelles.

17. Sceau (1) selon une des revendications de 8 à 16, **caractérisé en ce que** la puce (11) comporte une mémoire pour la mémorisation de la propriété physique de l'élément de mesure (13, 13a, 13b, 13c).

18. Sceau (1) selon une des revendications de 8 à 17, **caractérisé en ce que** l'élément de fixation (17) allongé flexible comprend au moins deux éléments de mesure (13, 13a, 13b, 13c), cependant que, de préférence, les au moins deux éléments de mesure (13, 13a, 13b, 13c) sont respectivement entourés par une enveloppe (14) et/ou sont agencés avec une torsion précontrainte l'un par rapport à l'autre et/ou par rapport à l'élément de fixation.

19. Sceau (1) selon une des revendications de 8 à 18, **caractérisé en ce que** l'équipement de mesure est conçu pour la détermination d'une résistance électrique, d'une capacité et/ou d'un parcours.

20. Sceau (1) selon une des revendications de 8 à 19, **caractérisé en ce que** l'élément de fixation (17) est réalisé sous forme de languette.

21. Sceau (1) selon une des revendications de 8 à 20, **caractérisé en ce que** l'élément de fixation (17) est relié à l'unité d'interface (16) de manière ne pouvant pas être détaché sans destruction.

22. Sceau (1) selon une des revendications de 8 à 21, **caractérisé en ce que** le sceau (1) a une structure modulaire, cependant que l'élément de fixation (17) et l'élément de liaison (18) sont de préférence reliés l'un à l'autre de manière ne pouvant pas être détachés sans destruction.

23. Sceau (1) selon une des revendications de 8 à 22, **caractérisé en ce que** l'élément de fixation (17) comprend une section rigide, en particulier un pontet.
